# EUROPEAN PATENT APPLICATION

(11) **EP 2 257 063 A1**
(43) Date of publication of application: **01.12.2010**
(21) Application number: 09713309.4
(22) Date of filing: 23.02.2009
(51) Int. Cl.: H04N 7/173, G06F 3/048, H04N 5/445

(54) **DISPLAY DEVICE, INTEGRATED INTERFACE DEVICE, AND METHOD OF CONTROLLING INTEGRATED INTERFACE DEVICE**

(30) Priority: 22.02.2008 JP 2008040940
(71) Applicant: Sharp Kabushiki Kaisha, Osaka-shi Osaka 545-8522 (JP)
(72) Inventor: MATSUYAMA, Satoshi, OSAKA 545-8522 (JP)
(74) Representative: Müller - Hoffmann & Partner
(86) International application number: PCT/JP2009/053152
(87) International publication number: WO 2009/104788

(57) **Abstract**

In conventional technologies, a display area of a screen cannot be used efficiently since icons or the like which display the hierarchical positions are displayed in the shape of a cross on the screen, particularly, a content list is displayed in a single column despite that there are vacant areas in the four directions of an interface whereon the icons or the like are displayed in the shape of a cross and the vacant areas cannot be used efficiently. Provided is an integrated interface device for performing a hierarchical operation for specifying a desired content list. The interface device has a function to display a content list, a content specified by the content list, or the like by efficiently using a vacant area in a lower part of the display by displaying icons which display a hierarchical relationship, for example, "display in a row", in an upper part of the screen, thereby clearing a large space in the lower part of the display.

## Description

### Field of the Invention

The present invention relates to technology of an integrated interface device improving efficiency of operations by a user upon selecting target content from a content list.

### Background Art

Recently, since content reproduction/display devices such an AV (Audio Visual) device is connectable to various content sources, one content reproduction/display device can display a huge number of contents. Specifically, the content reproduction/display device can reproduce/display contents in a content recorder such as an externally connected domestic server or a video recorder in addition to contents recorded in a recording medium in the content reproduction/display device. Moreover, if the content reproduction/display device is equipped with a broadcast receiving tuner, it can reproduce/display broadcast contents, and if it is equipped with a function of connecting to the internet, it can reproduce/display internet resources.

However, when such contents reproducible/displayable by the content reproduction/display device increase, the user's operations to search for and designate the content, which the user desires to reproduce, from the huge number of contents become complicated. Therefore, for example, in Japanese Unexamined Patent Application Publication No. 2006-33094, a graphical user interface, in which hierarchization of the selection items is carried out, items in the upper part of the hierarchy are arranged in a horizontal line, and items in the lower part of the hierarchy are arranged perpendicular to the items in the upper part of the hierarchy (i.e., a vertical line if the items in the upper part of the hierarchy are arranged in a horizontal line), thereby enabling designation of the content to be reproduced, is disclosed.
Patent Reference 1: Japanese Unexamined Patent Application Publication No. 2006-33094

### Disclosure of the Invention

### Problems that the Invention Tries to Solve

However, in the above technology, since the icons etc. indicating the hierarchical position are arranged in a cross shape, and displayed on a screen, display area in the screen is not efficiently utilized. Specifically, for example, when selecting a program content recorded in a HDD of a HDD/DVD recorder, at the outset, the icon 'HDD' is selected from icons 'HDD', 'DVD' and 'external input'. Subsequently, thumbnails of contents recorded in the HDD are arranged in a vertical line and displayed such that the line is perpendicular to the 'HDD' icon, thereby being utilized as a content list. However, despite the free spaces in all four directions of the interface displayed in a cross shape, the content list is displayed in a vertical line, so that the free space is not efficiently utilized. Additionally, when the huge number of contents is recorded in the HDD, it requires a large amount of scrolling for the content list arranged in a vertical line.

### Means for Solving the Problems

In order to solve the above deficiencies, the present invention is an interface device for hierarchical operation to designate a desired contents list, for example, in order of 'broadcasting', 'terrestrial digital broadcasting', and 'program guide (content list)', and icons indicating such hierarchical relation are 'displayed in a line' on the upper portion of a screen. Therefore, by the 'display in a line' of the icons, it is possible to clear the lower portion of the screen display, so that the lower portion can be efficiently utilized, thereby displaying the content list and the content designated from the content list. Specifically, the integrated interface device, comprises a storage for content list, storing a content list, a storage for list information, storing list information including a linkage between a type of a media for acquiring content, a type of a device for acquiring the content with respect to each type of media, and content list ID acquirable with respect to each type of device, a hierarchical display unit, displaying an icon for type of media, an icon for type of device subsequent to the icon for type of media, and an icon for content list subsequent to the icon for type of device in a line based on the list information in accordance with each linkage, a focus unit for focusing the respective icons, a selection entry unit for entry of selection of the focused icon, and an output unit for content list, outputting the content list.

### Effects of the Invention

According to the present invention having the above configuration, it is possible to secure the area for displaying the content list and the content, thereby efficiently utilizing the entire display screen even upon displaying the interface for operation.

### BRIEF DESCRIPTION OF THE DRAWINGS

Fig. 1 is a diagram showing an example of an operation screen of a display device including an integrated interface device of a first embodiment.
Fig. 2 is a functional block diagram of the integrated interface device of the first embodiment.
Fig. 3 is a diagram showing an example of a content list stored by a storage for content list of the integrated interface device of the first embodiment.
Fig. 4 is a diagram showing an example of linkage among a type of media, a type of device, and a type of content list ID of the integrated interface device of the first embodiment.
Fig. 5 is a diagram showing an example of list information stored in a storage for list information of the integrated interface device of the first embodiment.
Fig. 6 is a diagram showing an example of display of icons in a line in a hierarchical display unit of the integrated interface device of the first embodiment.
Fig. 7 is a diagram showing an example of a hardware configuration of the integrated interface device of the first embodiment.
Fig. 8 is a flowchart showing processes in the integrated interface device of the first embodiment.
Fig. 9 is a diagram showing an example of change of an operation screen of a display device including an integrated interface device of a second embodiment.
Fig. 10 is a functional block diagram of the integrated interface device of the second embodiment.
Fig. 11 is a diagram showing an example of a concept of L-shaped or T-shaped display of icons in means for displaying options in same hierarchy of the integrated interface device of the second embodiment.
Fig. 12 is a flowchart showing processes in the integrated interface device of the second embodiment.
Fig. 13 is another functional block diagram of the integrated interface device of the second embodiment.
Fig. 14 is a flowchart showing other processes in the integrated interface device of the second embodiment.
Fig. 15 is a diagram showing a simple remote control as an example of an input device for operating an integrated interface device of a third embodiment.
Fig. 16 is a functional block diagram of the integrated interface device of the third embodiment.
Fig. 17 is a flowchart showing processes in the integrated interface device of the third embodiment.
Fig. 18 is a diagram showing a feature of an icon display of an integrated interface device of a fourth embodiment.
Fig. 19 is a functional block diagram of the integrated interface device of the fourth embodiment.
Fig. 20 is a flowchart showing processes in the integrated interface device of the fourth embodiment.
Fig. 21 is a diagram showing a simple remote control as an example of an input device for operating an integrated interface device of a fifth embodiment.
Fig. 22 is a functional block diagram of the integrated interface device of the fifth embodiment.
Fig. 23 is a flowchart showing processes in the integrated interface device of the fifth embodiment.
Fig. 24 is a diagram showing an example of a screen on a display of an integrated interface device of a sixth embodiment.
Fig. 25 is a functional block diagram of the integrated interface device of the sixth embodiment.
Fig. 26 is a flowchart showing processes in the integrated interface device of the sixth embodiment.
Fig. 27 is a diagram showing an example of change of a screen by operation using an activation button for navigation of an integrated interface device of a seventh embodiment.
Fig. 28 is a functional block diagram of the integrated interface device of the seventh embodiment.
Fig. 29 is a flowchart showing processes in the integrated interface device of the seventh embodiment.
Fig. 30 is a diagram showing an example of change of a screen by operation using an activation button for navigation of an integrated interface device of an eighth embodiment.
Fig. 31 is a functional block diagram of the integrated interface device of the eighth embodiment.
Fig. 32 is a flowchart showing processes in the integrated interface device of the eighth embodiment.
Fig. 33 is a functional block diagram of the integrated interface device of the ninth embodiment.
Fig. 34 is a flowchart showing processes in the integrated interface device of the ninth embodiment.
Fig. 35 is a functional block diagram of the integrated interface device of the tenth embodiment.
Fig. 36 is a flowchart showing processes in the integrated interface device of the tenth embodiment.
Fig. 37 is a functional block diagram of the integrated interface device of the eleventh embodiment.
Fig. 38 is another functional block diagram of the integrated interface device of the eleventh embodiment.
Fig. 39 is a diagram showing an example of a hardware configuration of the integrated interface device of the eleventh embodiment.
Fig. 40 is a flowchart showing processes in the integrated interface device of the eleventh embodiment.
Fig. 41 is a functional block diagram of the integrated interface device of a twelfth embodiment.
Fig. 42 is a flowchart showing processes in the integrated interface device of the twelfth embodiment.

### DETAILED DESCRIPTION OF THE INVENTION

Embodiments of the present invention will be described hereinbelow with reference to the drawings. The present invention is not to be limited to the above embodiments and able to be embodied in various forms without departing from the scope thereof. The first embodiment will mainly describe Claims 1 and 17. The second embodiment will mainly describe Claims 2, 3 and 4. The third embodiment will mainly describe Claims 5 and 8. The fourth embodiment will mainly describe Claim 10.

The fifth embodiment will mainly describe Claim 11. The sixth embodiment will mainly describe Claim 12. The seventh embodiment will mainly describe Claim 13. The eighth embodiment will mainly describe Claim 14. The ninth embodiment will mainly describe Claim 15. The tenth embodiment will mainly describe Claim 16. The eleventh embodiment will mainly describe Claims 6 and 7. The twelfth embodiment will mainly describe Claim 9.

### <<First Embodiment>>

### <Concept of First Embodiment>

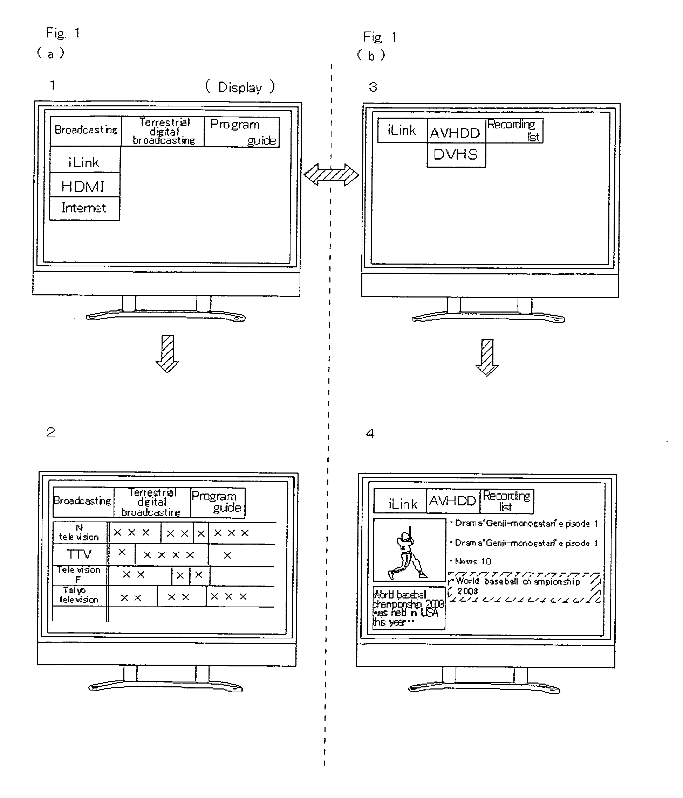

Fig. 1 is a diagram showing an example of an operation screen of a display device including an integrated interface device of a first embodiment. Note that the display device is equipped with a receiving tuner for various 'broadcasts' such as the 'terrestrial digital broadcasting', 'BS broadcasting' or 'CS broadcasting'. Moreover, the device is equipped with the external input terminal such as 'iLink' and 'HDMI', and is connected with an external content recording/reproducing device (e.g., AVHDD recorder or D-VHS recorder) through the terminal. Moreover, the device is equipped with the internet connection function, and can receive and reproduce streaming movie distributed from a movie distribution server on the internet or a DLNA server on domestic LAN. As shown in Fig. 1(a)1, for example, icons indicating the content sources such as 'broadcast', 'iLink', 'HDMI', and 'Internet' are vertically arranged and displayed. Here, for example, when the user moves a cursor onto the 'broadcast' and presses the entry button through operation by a remote control, the other icons in the same hierarchy are deleted, and icons of 'terrestrial digital broadcasting' etc. in the lower hierarchy of the 'broadcast' are displayed on the side of the 'broadcast'. Subsequently, when the user selects the 'terrestrial digital broadcasting', moves the cursor onto the 'program guide' and presses the entry button by the 'remote control', as shown in Fig.1(a)2, under these icons displayed in the line, the 'program guide of 'terrestrial digital broadcasting' as the content list is displayed.

Moreover, in a state of Fig. 1(a)1, when the user presses a down button of the 'remote control', moves the cursor onto the 'iLink' and presses the entry button, the display screen changes to the state as shown in Fig. 1(b)3. Therefore, the icons in the same hierarchy other than the 'iLink' are deleted, and icons of 'AVHDD' and 'DVHS' etc. connected to the 'iLink' (belong to the lower hierarchy) are vertically displayed. Subsequently, when the user selects the 'AVHDD', moves the cursor onto the 'recording list' and presses the entry button by the 'remote control', as shown in Fig.1(b)4, under these icons displayed in the line, the 'recording list of AVHDD recorder' as the content list is displayed.

Thus, according to the integrated interface device of the first embodiment, it is possible to secure the area for displaying the content list etc. even upon displaying the interface for operation such as the icon, thereby efficiently utilizing the entire display screen even upon displaying the interface for operation.

### <Functional Configuration of First Embodiment>

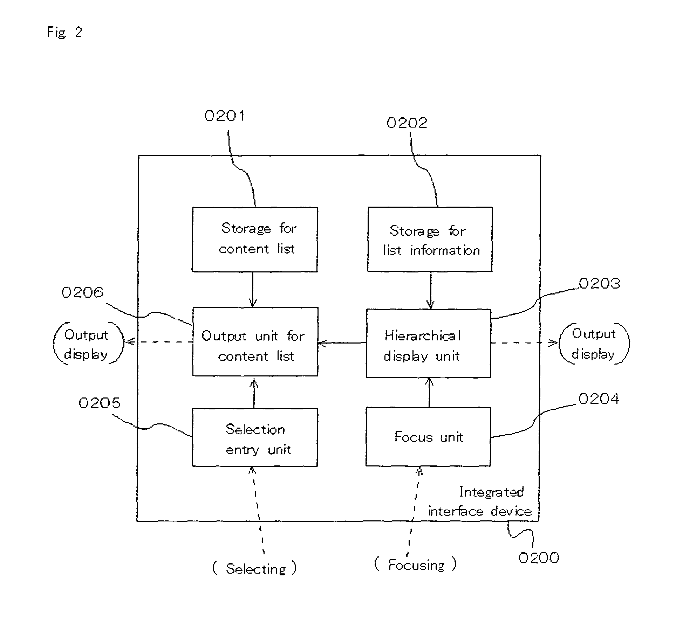

Fig. 2 is a functional block diagram of the integrated interface device of the first embodiment. As shown in Fig. 2, the 'integrated user interface device' (0200) of the first embodiment comprises a 'storage for content list' (0201), a 'storage for list information' (0202), a 'hierarchical display unit' (0203), a 'focus unit' (0204), a 'selection unit' (0205), and an 'output unit for content list' (0206).

Note that, the functional block of the integrated interface device can be implemented by hardware, software, or both hardware and software. Specifically, in the case of using a computer, the respective units are implemented by the hardware configured by a CPU, a main memory, a bus, a secondary storage device (e.g., a hard disk or a nonvolatile memory, a storage media such as CD-ROM or DVD-ROM, or a reading drive for the above media), input device for inputting information, printing device, display device, other peripheral devices, and interface for the other peripheral devices and communication interface; and driver program for controlling the above hardware, other application programs, and application for user interface. The CPU executes operation in accordance with the program developed on the main memory, so that processing, storing and outputting of the data, inputted through the input device or the interface etc. and stored in the memory of the hard disk, carried out, and instructions to control the hardware and software are generated. Moreover, the present invention can be implemented not only as an apparatus but also as a method thereof.

Moreover, a portion of such inventions may be configured as software. Furthermore, a software product used for causing a computer to execute the software, and the recording medium, in which the software is installed, should be included in the technical scope of the present invention (the same applies throughout the entire specification). In addition, the integrated interface device (or method, or program) of the present invention is installed into various content reproduction devices, and displays the user interface on the display screen by the actions of the following components, and the content reproduction device is not limited.

The 'storage for content list' (0201) has a function of storing a content list, and for example, can be implemented by various storage mediums such as a flash memory. The 'content list' is a list for designating content to be reproduced. Examples of such list include a list of image information such as thumbnails or a list of characters, symbols, and icons. Additionally, as described above, it is preferable that the content list is made such that the thumbnails and characters are displayed using entire displayable area of the content list to efficiently use the screen.

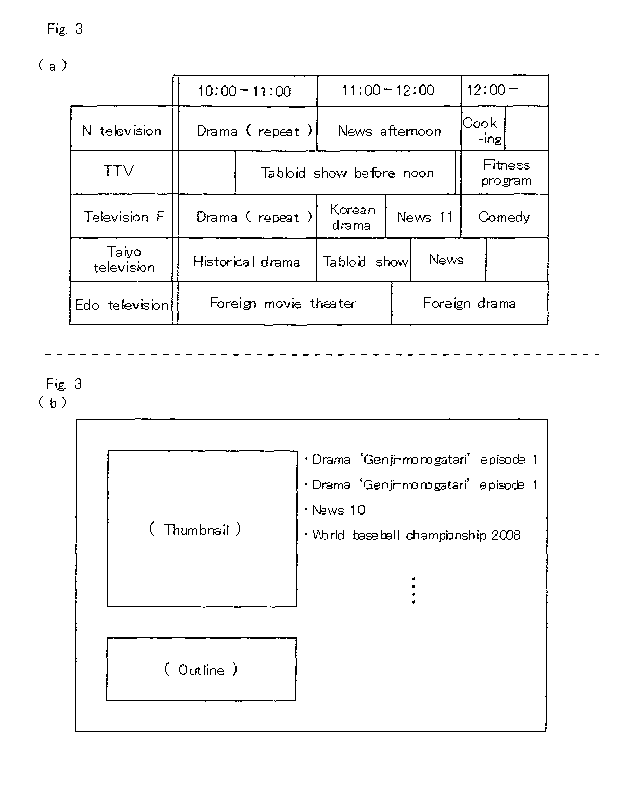

Fig. 3 is a diagram showing an example of the content list stored by the storage for content list of the integrated interface device of the first embodiment. As shown in Fig. 3(a), an example of the content list includes a content list of broadcasted program contents, therefore, a program guide received by a broadcast receiving tuner for terrestrial digital broadcasting, BS broadcasting or CS broadcasting. Moreover, as shown in Fig. 3(b), in the case of AVHDD recorder or digital camera, recording list or shooting review list of content recorded/stored in the device.

Note that, the storage for content may have a configuration for acquiring the content list from the device and temporarily storing it in response to an output request for content list from the after-mentioned output unit for content list in addition to the above configuration.

The 'storage for list information' (0202) has a function of storing list information including a linkage among a type of a media, a type of a device, and content list ID. The 'type of media' means information to identify the type of media for acquiring the content. Specifically, examples of the type of media include 'broadcasting', a media for acquiring broadcasted program content, 'external connection terminal', a media for acquiring the content from external device, and 'internet', a media for acquiring the content from a server connected through the internet or domestic LAN. Moreover, the external connection terminal may be provided with respect to each terminal such as 'iLink' or 'HDMI'.

Other examples of the type of media include 'built-in media' for acquiring the recorded content from the built-in recording media, 'high-speed wireless communication' for acquiring the content from the external device through the high-speed wireless communication such as IrSimple, 'card reader' for acquiring the imaged content from a flash memory card as a recording media for a digital camera, or 'DVD/Next-generation DVD drive' for acquiring the content from a disc-type media.

Subsequently, the 'type of device' means information for identifying a type of device for acquiring the content with respect to each type of media. Specifically, examples of the 'broadcasting' as the type of media include 'Terrestrial digital broadcasting (tuner)', 'BS broadcasting (tuner)', 'CS broadcasting (tuner)', and 'cable TV (tuner)'. Examples of the 'external input terminal' as the type of media include 'AVHDD (recorder)', 'DVHS (recorder)', 'Next-generation DVD (recorder)', and 'HDD (recorder)'. Examples of the 'internet' as the type of media include 'movie distribution server (server's name or Web page's name of the server)', and 'DLNP server (server's name)' on the domestic LAN.

The 'content list ID' means information for identifying the list of the acquirable content with respect to each type of device, and examples thereof include the information for identifying 'program guide' of the broadcasting received by the above receiving tuner, and the information identifying the 'movie list' of the recording device. Since the above content list is correlated with the content list ID and stored in the storage for content list, the integrated interface device of the present invention can call the content list by selection operation of the icon indicating type/ID.

Moreover, in the first embodiment, the storage for content list 'makes linkage among icons for the' type of media', 'type of device', and 'content list ID', and 'stores' the icons, thereby displaying the icons in a line, and securing a display area for the content list on the display screen. Hereinbelow, description of the above 'linkage among the type of media, type of device, and 'content list ID' is provided with reference to Figs, 4 and 5.

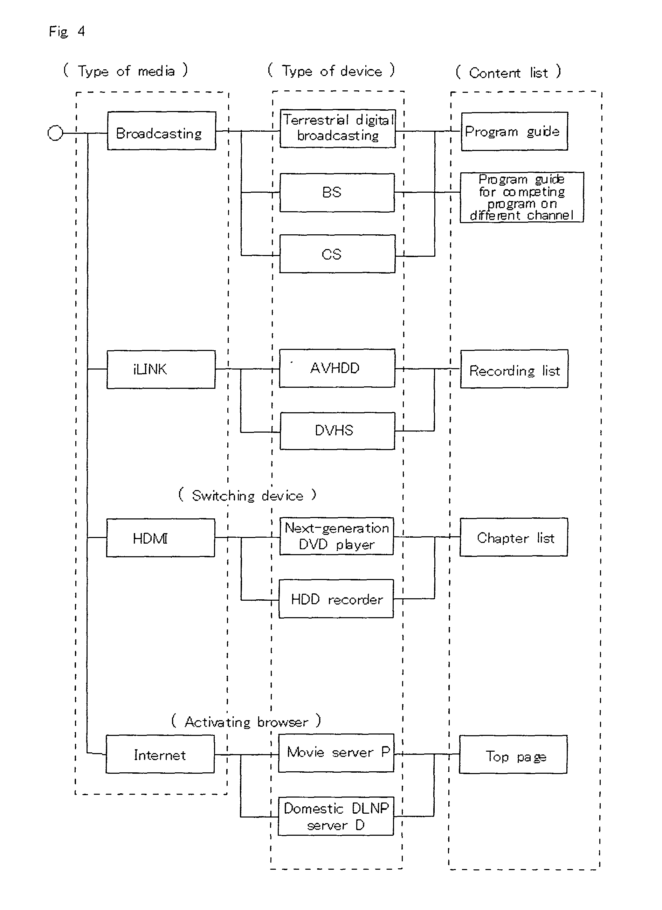

Fig. 4 is a diagram showing an example of linkage among a type of media, a type of device, and a type of content list ID of the integrated interface device of the first embodiment. As shown in Fig. 4, for example, 'terrestrial digital broadcasting (tuner)', 'BS broadcasting (tuner)', and 'CS broadcasting (tuner)', as the type of device are correlated with the 'broadcasting' as the type of media. Subsequently, the 'program guide ID' with respect to each broadcast wave as the content list is correlated with the type of device. Similarly, 'AVHDD (recorder)', and 'DVHS (recorder)', as the external input terminal connected with the iLink are correlated with the 'iLink', and the respective IDs of the recording list are correlated with the above. Thus, the linkage among the 'type of device' and the 'content list ID' of the device with respect to each 'type of media' are established, so that when focusing on any one of the items 'type of media', 'type of device' and 'content list ID', other icons having linkage with the item are displayed in a line.

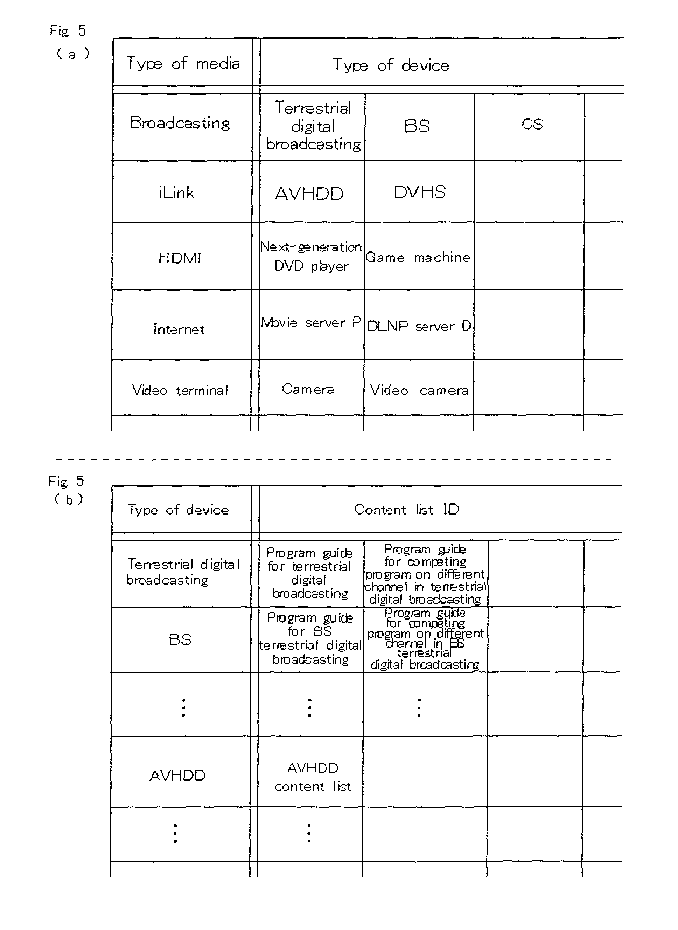

Moreover, in order to display the above linkage, the storage for list information may correlate and store, for example, a plurality of data tables. Fig. 5 is a diagram showing an example of list information stored in the storage for list information the integrated interface device of the first embodiment. As shown in Fig. 5(a), the 'type of media' is correlated with the 'type of device' with respect to each type of media. Moreover, as shown in Fig. 5(b), the 'type of device' is correlated with the 'content list ID' with respect to each type of device. Therefore, by combination of these data tables, it is possible to establish the 'linkage displayable in a line' in Fig. 4.

Note that the above names of type of media, type of device, and content ID are just examples, so that the 'broadcasting' as the type of media may be 'television', and the respective names of devices may be production name, production number, IP address, or identification name named by the user other than the above device names. Similarly, the content list ID may be arbitrarily named.

The 'hierarchical display unit' (0203) has a function of displaying an icon for type of media, an icon for type of device subsequent to the icon for type of media, and an icon for content list subsequent to the icon for type of device in a line based on the list information in accordance with each linkage.

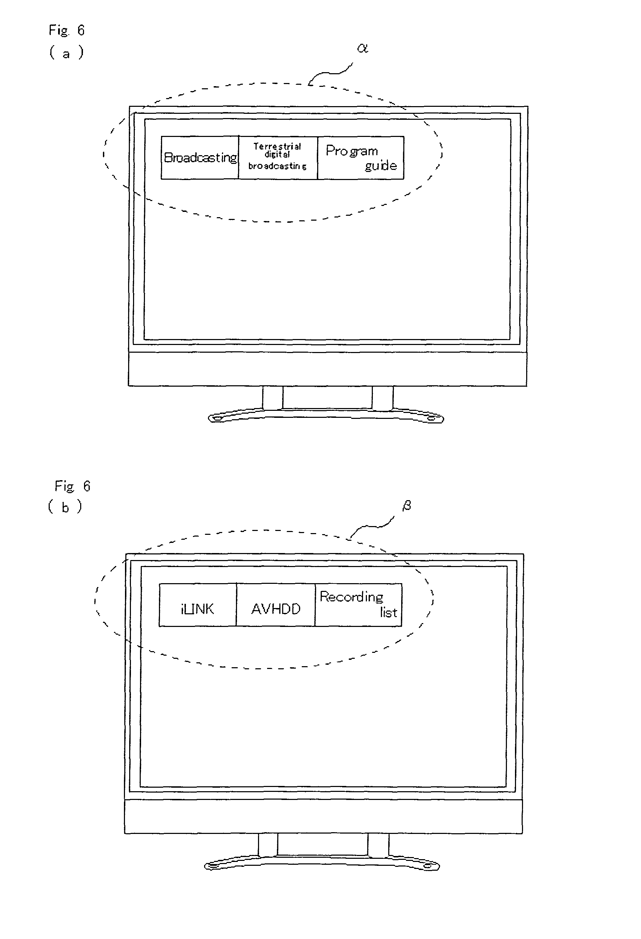

Fig. 6 is a diagram showing an example of display of icons in a line in the hierarchical display unit. As shown in Fig. 6(a), when focusing on the 'broadcasting' as the type of media, in accordance with the linkage of Figs. 4 and 5, the icons indicating this type are displayed in a line like (α). Here, when focusing on the 'BS broadcasting' as the type of device after focusing on the 'broadcasting' as the type of media, the icon 'BS broadcasting' is displayed instead of the icon 'terrestrial digital broadcasting' of Fig. 6(a). Moreover, as shown in Fig. 6(b), when focusing on the 'iLink' as the type of media, in accordance with the linkage of Figs. 4 and 5, the icons indicating this type are displayed in a line like (β). Note that, a determination as to which icon is displayed as the type of device, the 'AVHDD' or 'DVHS', upon focusing on the 'iLink' may be carried out utilizing a predetermined rule (e.g., a rule to firstly display the one indicated above the other in the data table of Fig. 5).

The most important aspect of the present invention is that even when any one of the icons is focused on by the user's operation, the combination of icons of the respective types is always displayed in a line on the display screen by the hierarchical display unit. Therefore, the icons are always displayed in a line, so that it is possible to secure the large space in the lower portion etc. of the display screen as shown in Fig. 6. Accordingly, it is possible to display the content list in a large scale in the space. Moreover, the line displayed by the hierarchical display unit may be a vertical line, and in this case, the content list may be displayed in a large scale in an adjacent space. Moreover, the 'icon' of the hierarchical display unit is not limited to the image icon, and may be an icon configured only by characters etc. as long as the icon is a symbol for the type of media, type of device, or content list ID on the display screen.

The 'focus unit' (0204) has a function of focusing the respective icons, and for example, can be implemented by an input device for instruction of direction such as an arrow key and a program for executing process in response to input operation by the input device. The 'focus' means process for designating the icon as a target for operation in the input operation through GUI using icons. Therefore, the selection by the after-mentioned selection entry unit is executed for the icon focused on by the focus unit. Specifically, when the 'broadcasting' icon is focused on by default in the GUI of the first embodiment, and down arrow key is pressed, in accordance with the hierarchy of icons as shown in Fig. 4, the focus moves onto the 'iLink' in the lower position of the same hierarchy. Subsequently, when the right arrow key is pressed at this time, in accordance with the hierarchy of icons as shown in Fig. 4, the 'AVHDD' icon (or 'DVHS' icon) is focused on.

The 'selection entry unit' has a function of entry of selection of the focused icon, and for example, can be implemented by the input device such as an entry key and a program for executing process in response to input operation by the input device. The terms 'selection of focused icon' means a process as a trigger for outputting the content list by the after-mentioned output unit for content list. Specifically, when the 'AVHDD' is focused on, and the entry button is pressed, as described below, the selection of the 'AVHDD' triggers the output of the content list (recording list) of the AVHDD.

The 'output unit for content list' (0206) has a function of outputting the content list having the linkage with the icon in accordance with the selection entry by the selection entry unit, and for example, can be implemented by a VRAM, a display, or a program for drawing. Specifically, when the 'AVHDD' icon has been selected by the selection entry unit, the output unit for content list refers to the list information as shown in Fig. 5, and specifies the content list ID thereof through calculation by the CPU. Subsequently, the content list identified by the ID is specified from the content list stored in the storage for content list through calculation by the CPU, and is outputted to and displayed on the display screen. Thus, in the first embodiment, the icons including the content list IDs are displayed in a line, so that it is possible to output the content list without focusing on the content list ID.

As described above, according to the integrated interface device of the first embodiment, it is possible to display the combination of icons of the respective types in a line on the upper portion of the display screen. Moreover, the user can focus and select the icon, so that the content list acquirable from the content source identified by the selected type of media and type of device is outputted onto the display screen.

### <Hardware Configuration of First Embodiment>

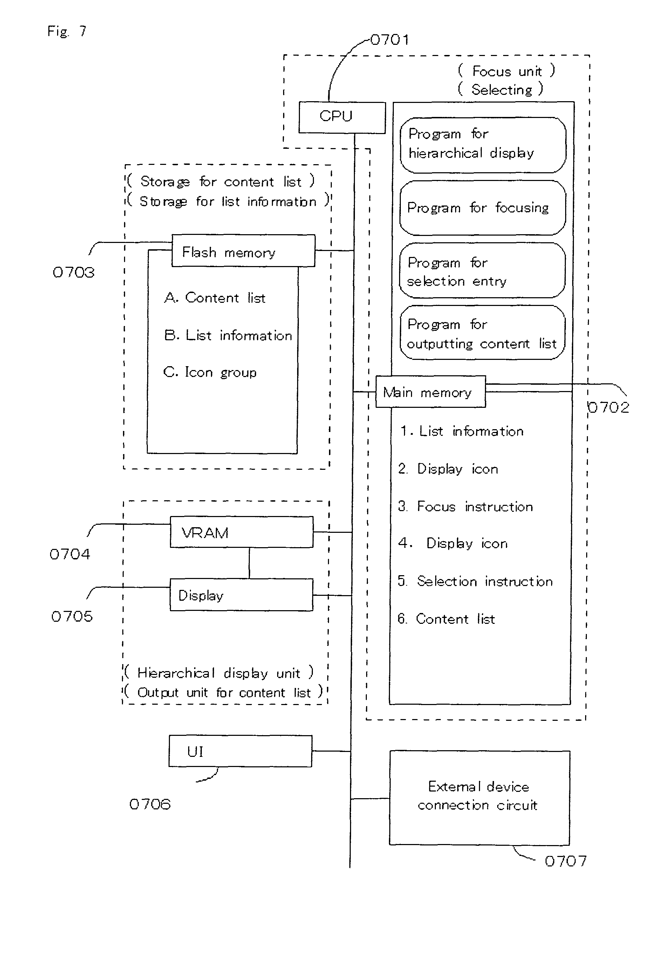

Fig. 7 is a diagram showing an example of a hardware configuration for implementing the above respective components of the integrated interface device of the first embodiment. Subsequently, actions of the respective hardware configurations in outputting the content list will be described with reference to Fig. 7.

As shown in Fig. 7, the integrated interface device is provided with a 'CPU' (0701), which works as the focus unit and selection entry unit, and executes other various calculations, and a 'main memory' (0702). Moreover, the 'flash memory' (0703) as the storage for content list and storage for list information, and the 'VRAM' (0704) and 'display' (0705) as the hierarchical display unit and the output unit for content list are also provided. Moreover, the 'UI (User Interface)' (0706) for receiving the inputs of the focus operation or selection operation, the 'external device connection circuit' for connecting the external content reproduction device etc, and a plurality of 'broadcast receiving tuners' and 'internet connection circuit' may be provided. These components are mutually connected through the data communication path of 'system bus' etc., thereby carrying out transmission/reception and processing of the information.

In the 'main memory', programs are developed, and the 'CPU' refers to the program and executes the various calculations. Moreover, a plurality of addresses are assigned to the main memory and the 'flash memory', and in the calculation by the 'CPU', address specification and access to the stored data are carried out, thereby executing calculation by utilizing the data.

Here, in accordance with a program for storing content list, which is not indicated in the diagram, for example, the content list is acquired from the external content reproduction device such as 'AVHDD recorder' or'DVHS recorder', connected to the 'external device connection circuit', and is stored at an address A in the 'flash memory'. Similarly, the electronic program guide included in the broadcast wave received by the 'broadcast receiving tuner', which is not indicated in the diagram, is stored as the content list at a predetermined address in the 'flash memory'. Moreover, in accordance with a program for storing list information, which is not indicated in the diagram, the list information is generated from the identification information of the type of media in the device, the identification information of the external device connected to the 'external device connection circuit', the identification information of the type of device, which is acquired from the type of tuner in the device, and the content list ID of the components, and is stored at an address B in the 'flash memory'.

After that, for example, when receiving the user's instruction of activation through the 'UI' etc, the integrated interface device of the first embodiment reads out a program for hierarchical display, a program for focusing, a program for selection entry, and a program for outputting content list into the 'main memory'. Subsequently, the 'CPU' interprets the program for hierarchical display, and in accordance with the program, reads out the list information stored at the address B in the 'flash memory', and stores the information at the address 1 in the 'main memory'. Subsequently, with reference to the list information as shown in Fig. 5, and by utilizing identification information of predetermined icon to be displayed by default, the device specifies the icons of the type of media, type of device, and content list ID, which have linkage and are to be firstly displayed in a line through calculation by the CPU. Subsequently, the device acquires the above-specified icons from the icon group stored at an address C in the 'flash memory', and stores the icons at an address 2 in the 'main memory'. Subsequently, as shown in Fig. 6, the icon images are arranged in a line, transferred to the 'VRAM', and displayed on the 'display'.

The user operates the 'UI' such as a cross-shaped key of a remote control with reference to the icons thus arranged in a line on the display screen. Subsequently, in response to the operation of the cross-shaped key, the focus instruction is acquired and stored at an address 3 in the 'main memory', so that in accordance with the program for focusing, a process for focusing on the operated icon is executed. Moreover, when the focused icon is an icon having a linkage different from that of the icon currently displayed, in accordance with the program for hierarchical display, the other icon and icons having the linkage with the icon are specified, and stored at an address 4 in the 'main memory'. Subsequently, the above icons are newly transferred to the 'VRAM', and displayed in a line on the 'display'.

Moreover, the user operates the 'UI' such as the selection (entry) button, with reference to the icons, including the content list ID desired by the user, are displayed in a line by the user's focus operation. Subsequently, in response to the press of the entry button, the selection instruction is acquired and stored at an address 4 in the 'main memory', so that in accordance with the program for selection entry, by the currently displayed content list ID as a key, search process of the content list stored at the address A in the 'flash memory' is executed through calculation by the CPU. As a result of the search, the specified content list is read out at an address 6 in the 'main memory'. Subsequently, in accordance with the program for outputting content list, the 'CPU' generates data for drawing for displaying the content list and transfers the data to the 'VRAM', thereby displaying the content list desired by the user on the 'display'.

Note that, in the above example, although the content list is stored in the flash memory, the content list may be stored in the respective externally connected content reproduction devices. In this case, a request for acquiring the content list is outputted to the device identified by the content list ID, and according to a response, the content list may be appropriately acquired from the external content reproduction device.

### <Processing Flow of First Embodiment>

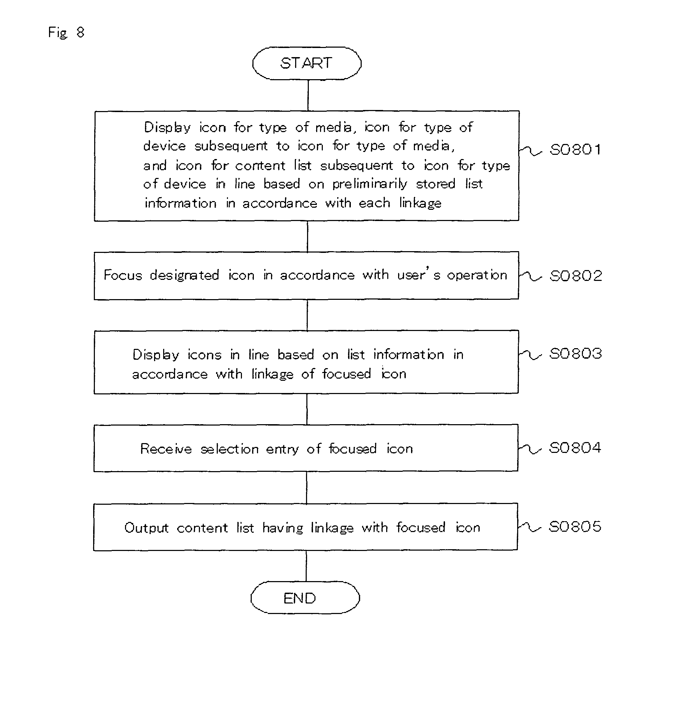

Fig. 8 is a flowchart showing processes in the integrated interface device of the first embodiment. Note that, the following step may be executed by the respective hardware configurations of a computer as the above, or may configure a program, which is stored in a medium and is for controlling the computer. As shown in Fig. 8, at the outset, display of the icon for type of media, icon for type of device subsequent to icon for type of media, and icon for content list subsequent to icon for type of device in line are executed based on the preliminarily stored list information in accordance with each linkage (step S0801). Subsequently, focus of designated icon is executed in accordance with the user's operation (step S0802), and display of icons in line is newly executed based on the list information in accordance with the linkage of the focused icon (step S0803). Subsequently, after repetition of newly displaying icons in a line as shown in the above steps S0802 and 0803 in response to the user's focus operation, the selection entry of the focused icon is received through the input device etc (step S0804). Subsequently, the content list having linkage with the selected icon is outputted (step S0805).

### <Brief Description of Effects of First Embodiment>

According to the integrated interface device of the first embodiment, the icons indicating the hierarchical structure for operation can be displayed in a line. Therefore, it is possible to secure the area for displaying the content list and the contents even upon displaying the icons, thereby efficiently utilizing the entire display screen even upon displaying the interface for operation.

### <<Second Embodiment>>

### <Concept of Second Embodiment>

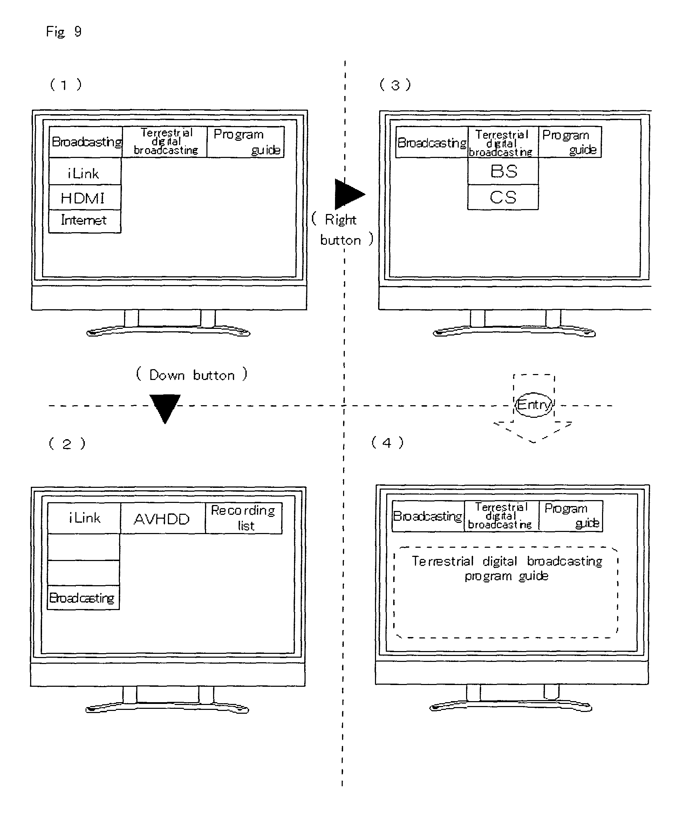

Fig. 9 is a diagram showing an example of change of an operation screen of a display device including an integrated interface device of a second embodiment. As shown in Fig. 9(1), in the second embodiment based on the first embodiment, for example, icons are displayed in a line in order of 'broadcasting', 'terrestrial digital broadcasting', and 'program guide'. Moreover, as to the 'broadcasting' icon focused by the focus unit, with reference to the hierarchy as shown in Fig. 4, the icons of 'iLink', 'HDMI', and 'internet', which indicate the other types of media in the same hierarchy, are arranged and displayed in a vertical line under the 'broadcasting' icon.

Here, for example, when pressing the down button of the cross-shaped key, as shown in Fig.9(2), focus moves onto the 'iLink' icon under the 'broadcasting' icon, and as described in the first embodiment, the icons of 'AVHDD' and 'recording list', which have linkage with the 'iLink', are displayed in a horizontal line. Moreover, in the second embodiment, icons in the same hierarchy are displayed downward under the 'iLink' icon.

Moreover, in the state of Fig. 9(1), for example, when pressing the right button of the cross-shaped key, as shown in Fig. 9(3), focus moves onto the 'terrestrial digital broadcasting' icon in the right side of the 'broadcasting' icon. Moreover, in the second embodiment, icons of 'BS broadcasting' and 'CS broadcasting' in the same hierarchy are displayed downward under the 'terrestrial digital broadcasting' icon. Furthermore, in the above state, when pressing the selection (entry) button, as shown in Fig. 9(4), the program guide of the terrestrial digital broadcasting as the content list of the 'terrestrial digital broadcasting' is displayed.

Thus, in the second embodiment, as to the icons of 'type of media', 'type of device' and 'content list ID', which are displayed in a line, icons, which belong to the same hierarchy as the focused icon and other than the focused icon, are arranged in a line of another direction, thereby displaying the icons in an L-shape or a T-shape. Moreover, icons, which belong to the same hierarchy as the focused icon and other than the focused icon, are further displayed in a line of another direction, so that the user can easily select the desired option viewing the icons in the same hierarchy.

### <Functional Configuration of Second Embodiment>

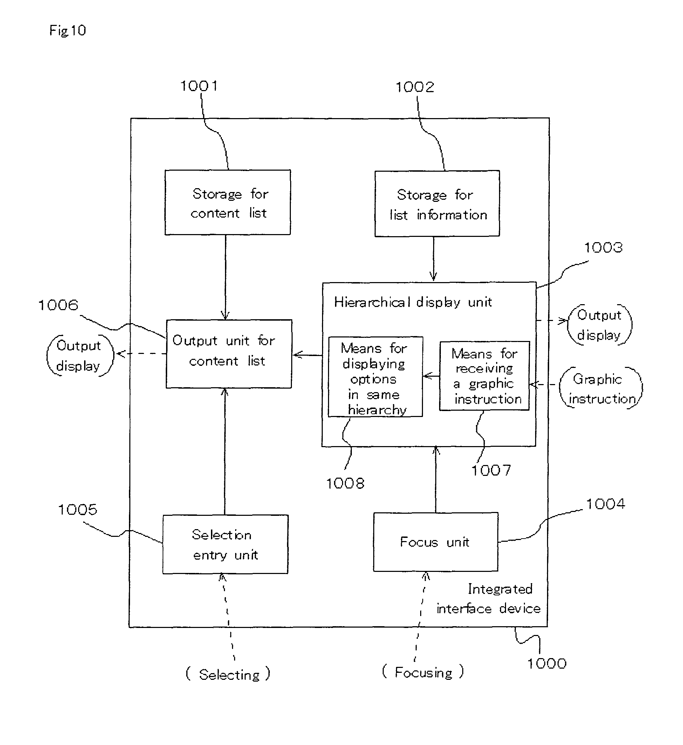

Fig. 10 is a functional block diagram of the integrated interface device of the second embodiment. As shown in Fig. 10, the 'integrated user interface device' (1000) of the second embodiment is based on the first embodiment, and comprises a 'storage for content list' (1001), a 'storage for list information' (1002), a 'hierarchical display unit' (1003), a 'focus unit' (1004), a 'selection unit' (1005), and an 'output unit for content list' (1006). Note that, these components have already been described in the first embodiment, so that descriptions are omitted. Moreover, in the integrated interface device of the second embodiment, the hierarchical display unit further comprises 'means for receiving graphic instruction' (1007) and 'means for displaying options in same hierarchy' (1008).

The 'means for receiving graphic instruction' (1007) has a function of receiving a graphic instruction, and for example, can be implemented by the input device equipped with a graphic instruction button etc, and a program for executing a process in response to the input through the input device. The 'graphic instruction' means an instruction as a trigger for executing the function of the after-mentioned means for displaying options in the same hierarchy.

The 'means for displaying options in same hierarchy' (1008) has a function of displaying other icons in the same hierarchy, such that the other icons are selectable, focusable and arranged perpendicular to the line of the icon for type of media, the icon for type of device, and the icon for content list so as to make an L-shape or a T-shape, with respect to each hierarchy by the graphic instruction for each icon.

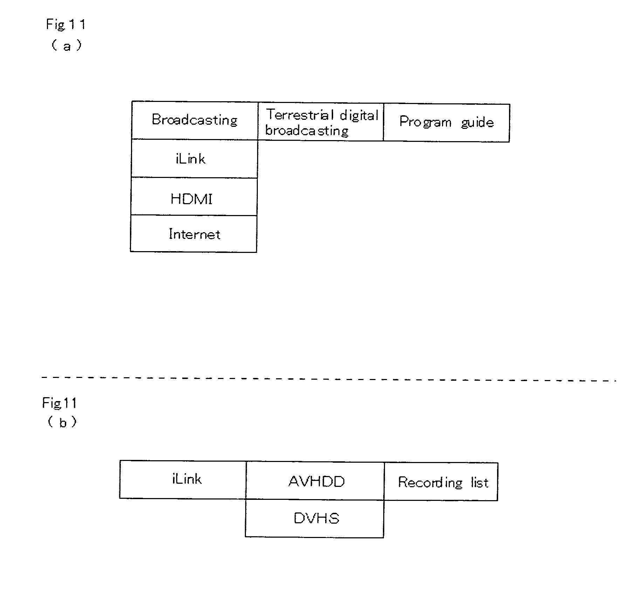

Fig. 11 is a diagram showing an example of a concept of an L-shaped or a T-shaped display of icons in means for displaying options in same hierarchy of the integrated interface device of the second embodiment. As shown in Fig. 11 (a), as to the icons displayed in a line in order of 'broadcasting', 'terrestrial digital broadcasting', and 'program guide', the icons of 'iLink', 'HDMI', and 'internet', which indicate the other types of media in the same hierarchy, are arranged and displayed under the 'broadcasting' icon such that the icons are arranged perpendicular to the line. Moreover, as shown in Fig. 11 (b), as to the icons displayed in a line in order of 'iLink', 'AVHDD', and 'recording list'; the icon, which indicates the other type of device in the same hierarchy as the 'AVHDD' located in the middle of the line, therefore, the 'DVHS' icon indicating the type of device connected through the iLink is displayed so as to make a T-shape under the 'AVHDD' icon. Note that the above example shows a case that the icons displayed in a line in the upper portion of the display screen, and when the icons and displayed in a line in the lower portion of the display screen, the other icons in the same hierarchy may be displayed in an inverted L-shape or an inverted T-shape. Moreover, when the icons and displayed in a vertical line, the other icons in the same hierarchy may be displayed in a lying L-shape or a lying T-shape.

As described above, in the integrated interface device of the second embodiment, in response to the graphic instruction, as to one icon, other icons in the same hierarchy as the one icon are displayed so as to make the L-shape or T-shape, so that the user can easily select the desired option viewing the icons in the same hierarchy

### <Processing Flow of Second Embodiment>

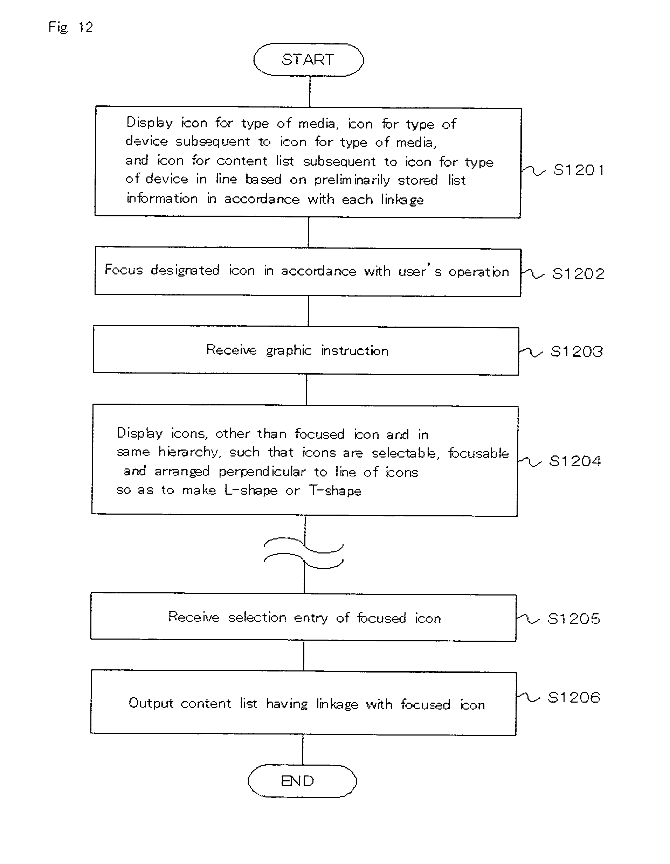

Fig. 12 is a flowchart showing processes in the integrated interface device of the second embodiment. Note that, the following step may be executed by the respective hardware configurations of a computer as the above, or may configure a program, which is stored in a medium and is for controlling the computer. As shown in Fig. 12, at the outset, display of the icon for type of media, icon for type of device subsequent to icon for type of media, and icon for content list subsequent to icon for type of device in line are executed based on the preliminarily stored list information in accordance with each linkage (step S1201). Subsequently, focus of designated icon is executed in accordance with the user's operation (step S1202), and when the graphic instruction through the user's operation is received (step S1203), in response to the reception of the graphic instruction, icons, other than the focused icon and in the same hierarchy, are displayed such that the other icons are selectable, focusable and arranged perpendicular to the line of the icons so as to make an L-shape or a T-shape (step S1204).

Subsequently, after repetition of displaying icons in a line as shown in the above steps S1202 and 1203 in response to the user's focus operation, the selection entry of the focused icon is received through the input device etc (step S1205). Subsequently, the content list having linkage with the selected icon is outputted (step S1206)..

### <Brief Description of Effects of Second Embodiment>

According to the integrated interface device of the second embodiment, in response to the graphic instruction, as to one icon, other icons in the same hierarchy as the one icon are displayed so as to make the L-shape or T-shape, so that the user can easily select the desired option viewing the icons in the same hierarchy.

### <Another Functional Configuration of Second Embodiment>

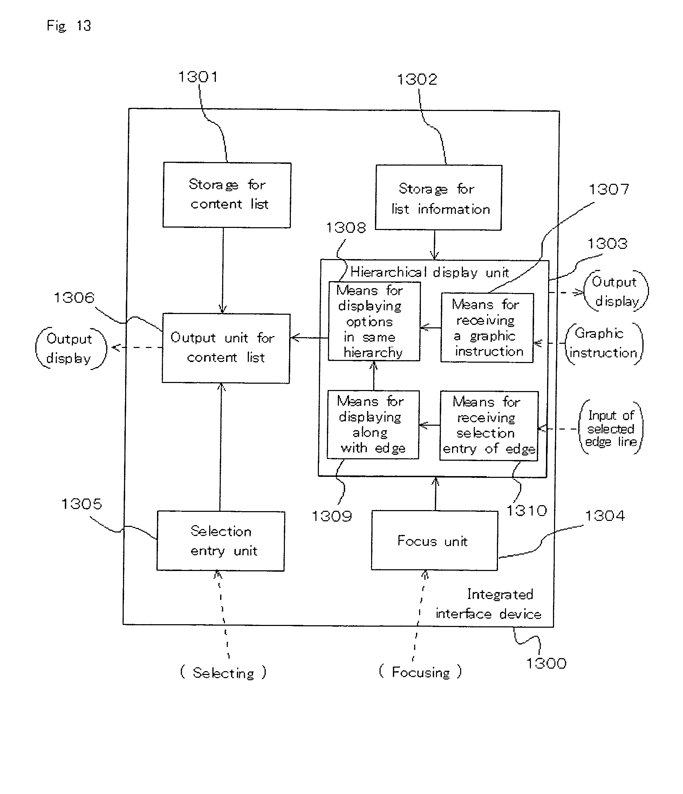

Fig. 13 is another functional block diagram of the integrated interface device of the second embodiment. As shown in Fig. 13, another 'integrated user interface device' (1300) of the second embodiment is based on the first embodiment, and comprises a 'storage for content list' (1301), a 'storage for list information' (1302), a 'hierarchical display unit' (1303), a 'focus unit' (1304), a 'selection unit' (1305), and an 'output unit for content list' (1306). Moreover, in the integrated interface device of the second embodiment, the hierarchical display unit further comprises 'means for receiving graphic instruction' (1307) and 'means for displaying options in same hierarchy' (1308). Note that, these components have already been described in the first embodiment, so that descriptions are omitted. Moreover, in another integrated interface device of the second embodiment, the hierarchical display unit further comprises 'means for displaying along edge' (1309) and 'means for receiving selection entry of edge' (1310).

The 'means for displaying along edge' (1309) has a function of displaying two lines of the L-shape or an upper line of the T-shape along edges or an edge of a display screen, and for example, can be implemented by the VRAM, the display, and a program for drawing graphic etc. Thus, according to the means for displaying along edge, it is possible to efficiently display icons arranged in the L-shape or T-shape along any one edge line of the display screen. Therefore, it is possible to secure larger display area excluding the icons.

The 'means for receiving selection entry of edge' (1310) has a function of receiving the entry of selection of the edge of the display screen, the edge is used for the display by the means for displaying along with edge, and for example, can be implemented by the input device and a program for executing the process in response to the input through the input device. Therefore, it is possible for the user to select the edge line of the display, along which the icons in an L-shape or a T-shape are to be displayed.

### <Another Processing Flow of Second Embodiment>

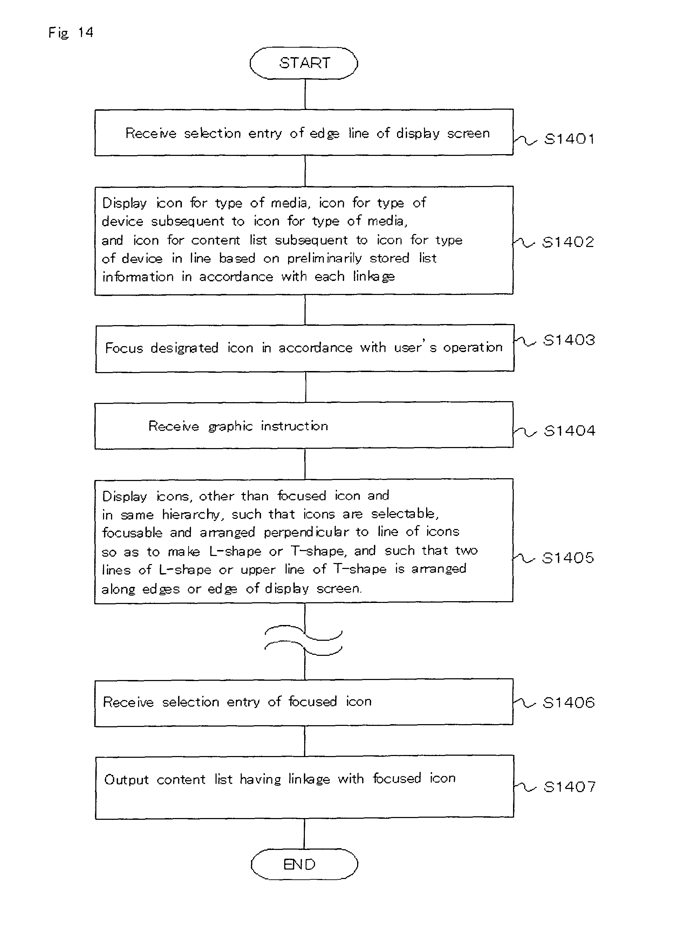

Fig. 14 is a flowchart showing processes in the integrated interface device of the second embodiment. Note that, the following step may be executed by the respective hardware configurations of a computer as the above, or may configure a program, which is stored in a medium and is for controlling the computer. As shown in Fig. 14, at the outset, selection entry of a edge line of the display screen, along which the icons in an L-shape or a T-shape are to be displayed, is received (step S1401). Subsequently, display of the icon for type of media, icon for type of device subsequent to icon for type of media, and icon for content list subsequent to icon for type of device in line are executed based on the preliminarily stored list information in accordance with each linkage (step S1402). Subsequently, focus of designated icon is executed in accordance with the user's operation (step S1403), and when the graphic instruction through the user's operation is received (step S1404), in response to the reception of the graphic instruction, icons, other than the focused icon and in the same hierarchy, are displayed such that the other icons are selectable, focusable and arranged perpendicular to the line of the icons so as to make an L-shape or a T-shape, and such that two lines of an L-shape or upper line of a T-shape are arranged along edges or edge of a display screen (step S1405).

Subsequently, after repetition of displaying icons in a line as shown in the above steps S1403 and 1405 in response to the user's focus operation, the selection entry of the focused icon is received through the input device etc (step S1406). Subsequently, the content list having linkage with the selected icon is outputted (step S1407).

### <Another Brief Description of Effects of Second Embodiment>

According to the integrated interface device of the second embodiment, it is possible to efficiently display icons arranged in the L-shape or T-shape along any one edge line of the display screen. Therefore, it is possible to secure larger display area excluding the icons. Moreover, it is possible for the user to select the edge line of the display, along which the icons in an L-shape or a T-shape are to be displayed.

### <<Third Embodiment>>

### <Concept of Third Embodiment>

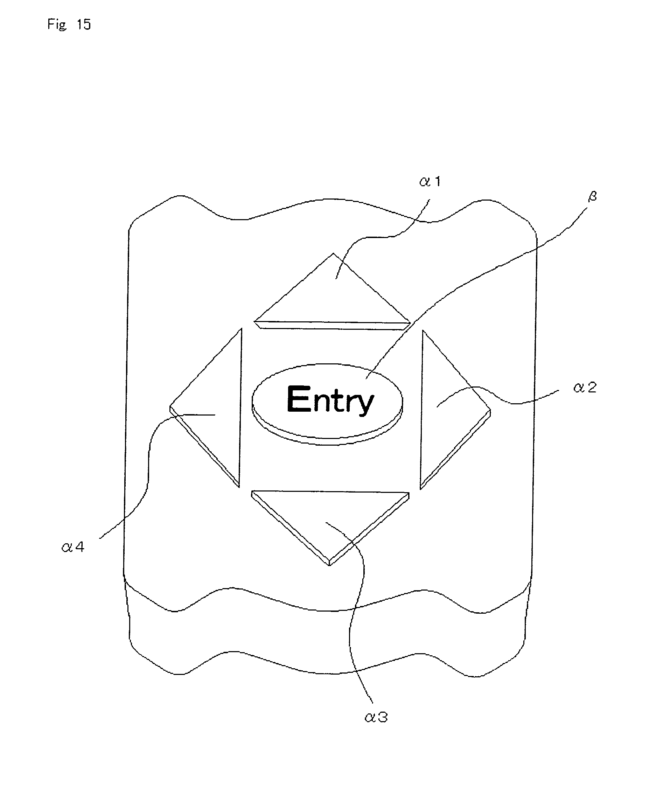

Fig. 15 is a diagram showing a simple remote control as an example of an input device for operating an integrated interface device of a third embodiment. As shown in Fig. 15, the remote control of the integrated interface device of the third embodiment is, for example, equipped with arrow keys α1 to α4 for up, down, right and left, and an entry button β. The integrated interface device of a third embodiment can be easily operated using such simple input device having small number of buttons.

### <Functional Configuration of Third Embodiment>

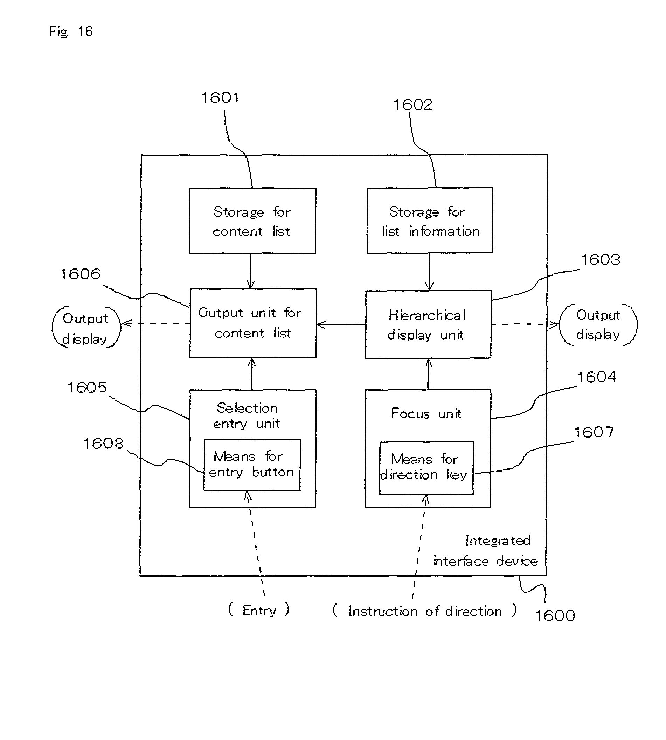

Fig. 16 is a functional block diagram of the integrated interface device of the third embodiment. As shown in Fig. 16, the 'integrated user interface device' (1600) of the third embodiment is based on the first embodiment, and comprises a 'storage for content list' (1601), a 'storage for list information' (1602), a 'hierarchical display unit' (1603), a 'focus unit' (1604), a 'selection unit' (1605), and an 'output unit for content list' (1606). Moreover, the integrated interface device of the third embodiment is based on the second embodiment, and may comprise 'means for receiving graphic instruction', 'means for displaying options in same hierarchy', and 'means for displaying along edge' and 'means for receiving selection entry of edge', which are not indicated in diagrams. Note that, these components have already been described in the first embodiment, so that descriptions are omitted. Moreover, in the integrated interface device of the third embodiment, the focus unit further comprises 'means for direction key' (1607), and/or the selection entry unit further comprises 'means for selection entry' (1608).

The 'means for direction key' (1607) includes a direction-key for moving the focus, specifically, arrow keys for up, down, right and left as shown in Fig. 15, provided on the remote control or other input devices, or a cross-shaped key as the direction key.

The 'means for selection entry' (1608) includes an entry button, one button as shown in Fig. 15 provided on the remote control or other input devices. Thus, in the integrated interface device of the third embodiment, the direction key and the entry key enable the focusing or selection of the icon. Therefore, by the input device with simple configuration, it is possible to carry out the operation.

### <Processing Flow of Third Embodiment>

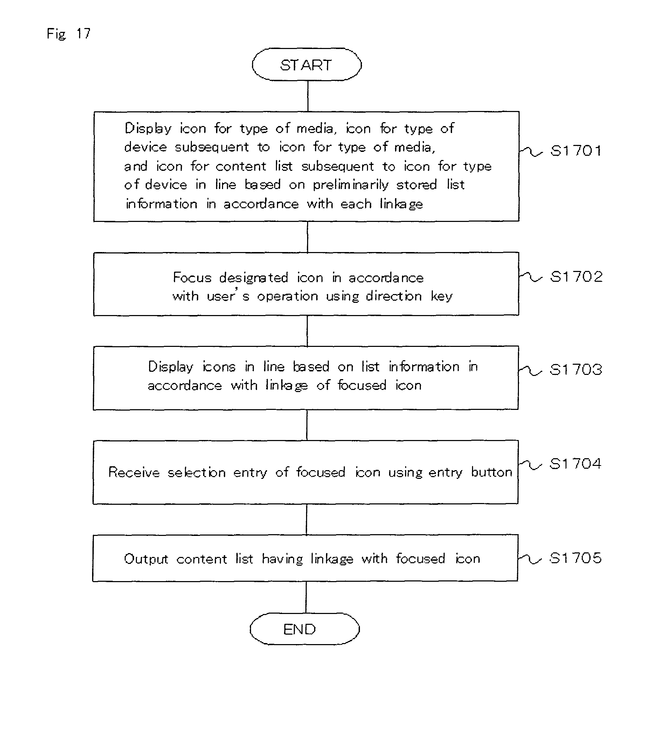

Fig. 17 is a flowchart showing processes in the integrated interface device of the third embodiment. Note that, the following step may be executed by the respective hardware configurations of a computer as the above, or may configure a program, which is stored in a medium and is for controlling the computer. As shown in Fig. 17, at the outset, display of the icon for type of media, icon for type of device subsequent to icon for type of media, and icon for content list subsequent to icon for type of device in line are executed based on the preliminarily stored list information in accordance with each linkage (step S1701). Subsequently, focus of designated icon is executed in accordance with the user's operation (step S1702), and display of icons in line is newly executed based on the list information in accordance with the linkage of the focused icon (step S1703). Subsequently, after repetition of newly displaying icons in a line as shown in the above steps S1702 and 1703 in response to the user's focus operation, the selection entry of the focused icon is received through the entry button provided with the input device (step S1704). Subsequently, the content list having linkage with the selected icon is outputted (step S1705).

### <Brief Description of Effects of Third Embodiment>

According to the integrated interface device of the third embodiment, the direction key and the entry key enable the focusing or selection of the icon. Therefore, by the input device with simple configuration, it is possible to carry out the operation.

### <<Fourth Embodiment>>

### <Concept of Fourth Embodiment>

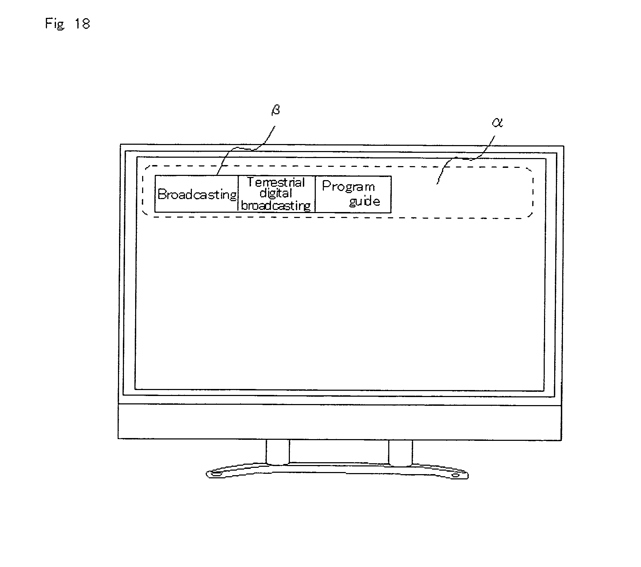

Fig. 18 is a diagram showing a simple remote control as an example of an input device for operating an integrated interface device of a fourth embodiment. As shown in Fig. 18, in the integrated interface device of the fourth embodiment, an area α surrounded by perforated lines is managed as a window frame, and the area within the frame is used for display area of an icon row β. Thus, in the integrated interface device of a fourth embodiment, it is possible to easily execute switching process of all icons such as display/non-display, or active/non-active with respect to each navigation window.

### <Functional Configuration of Fourth Embodiment>

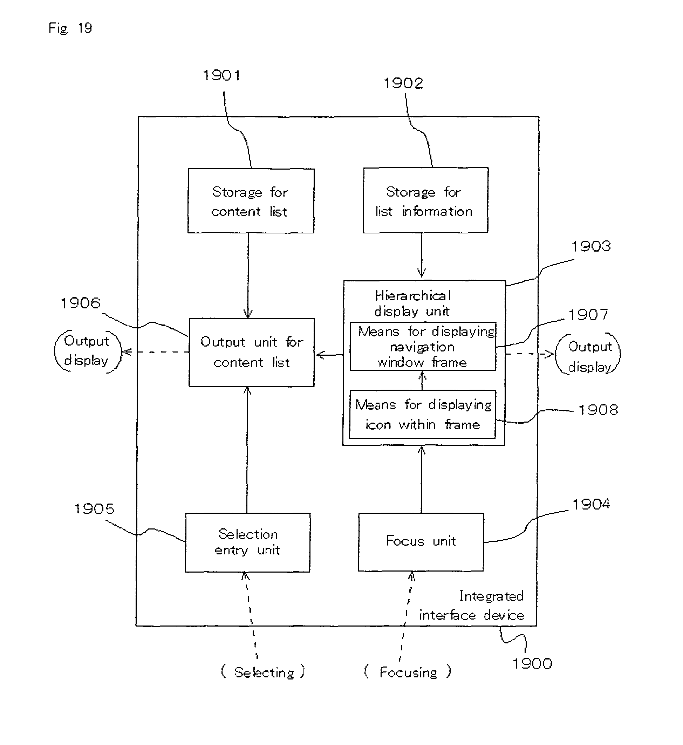

Fig. 19 is a functional block diagram of the integrated interface device of the fourth embodiment. As shown in Fig. 19, the 'integrated user interface device' (1900) of the fourth embodiment is based on the first embodiment, and comprises a 'storage for content list' (1901), a 'storage for list information' (1902), a 'hierarchical display unit' (1903), a 'focus unit' (1904), a 'selection unit' (1905), and an 'output unit for content list' (1906). Moreover, the integrated interface device of the fourth embodiment is based on the second or third embodiment, and may comprise the 'means for receiving graphic instruction', the 'means for displaying options in the same hierarchy', the 'means for displaying along edge', the 'means for receiving selection entry of edge', the 'means for direction key' and the 'means for entry button', which are not indicated in diagrams. Note that, these components have already been described in the first embodiment, so that descriptions are omitted. Moreover, in the integrated interface device of the fourth embodiment, the means for displaying options in the same hierarchy further comprises 'means for displaying navigation window frame' (1907), and 'means for displaying icon within frame' (1908).

The 'means for displaying navigation window frame' (1907) has a function of displaying a navigation window frame for the icon on a part of the display screen used for content reproduction. The 'navigation window frame' is a frame indicating a display area on the display screen provided for an application for displaying the icon. This display of a frame on the display screen enables operation such as enlarging, reducing, or moving of the frame with respect to each frame. Note that, it is preferable that frame border is displayed on the display screen. Alternatively, the navigation window frame may be displayed without such frame border in invisible manner for the user, and the frame may be identified and managed only on the application.

The 'means for displaying icon within frame' (1908) has a function of displaying the icon within the navigation window frame. Thus, by displaying the icon within the navigation window, it is possible to easily execute switching process of all icons such as display/non-display, or active/non-active with respect to each navigation window.

### <Processing Flow of Fourth Embodiment>

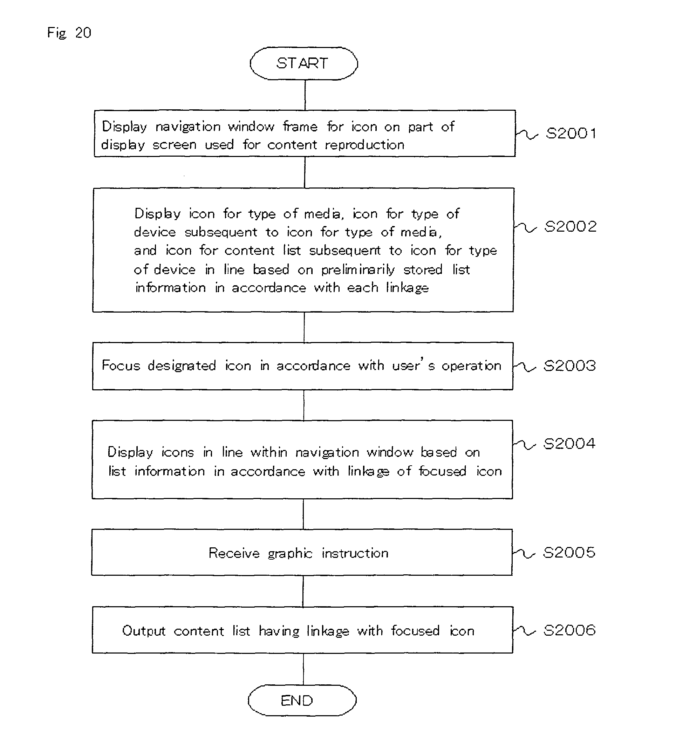

Fig. 20 is a flowchart showing processes in the integrated interface device of the fourth embodiment. Note that, the following step may be executed by the respective hardware configurations of a computer as the above, or may configure a program, which is stored in a medium and is for controlling the computer. As shown in Fig. 20, at the outset, the navigation window frame for icon on part of display screen used for content reproduction is displayed (step S2001). Subsequently, display of the icon for type of media, icon for type of device subsequent to icon for type of media, and icon for content list subsequent to icon for type of device in line are executed based on the preliminarily stored list information in accordance with each linkage (step S2002). Subsequently, focus of designated icon is executed in accordance with the user's operation (step S2003), and display of icons in line within the navigation window frame is newly executed based on the list information in accordance with the linkage of the focused icon (step S2004). Subsequently, after repetition of newly displaying icons in a line as shown in the above steps S2003 and 2004 in response to the user's focus operation, the selection entry of the focused icon is received through the input device (step S2005). Subsequently, the content list having linkage with the selected icon is outputted (step S2006).

### <Brief Description of Effects of Fourth Embodiment>

According to the integrated interface device of the fourth embodiment, it is possible to display the navigation window frame on the display screen, thereby displaying and managing the icon within the frame. Moreover, it is possible to easily execute switching process of all icons such as display/non-display, or active/non-active with respect to each navigation window.

### <<Fifth Embodiment>>

### <Concept of Fifth Embodiment>

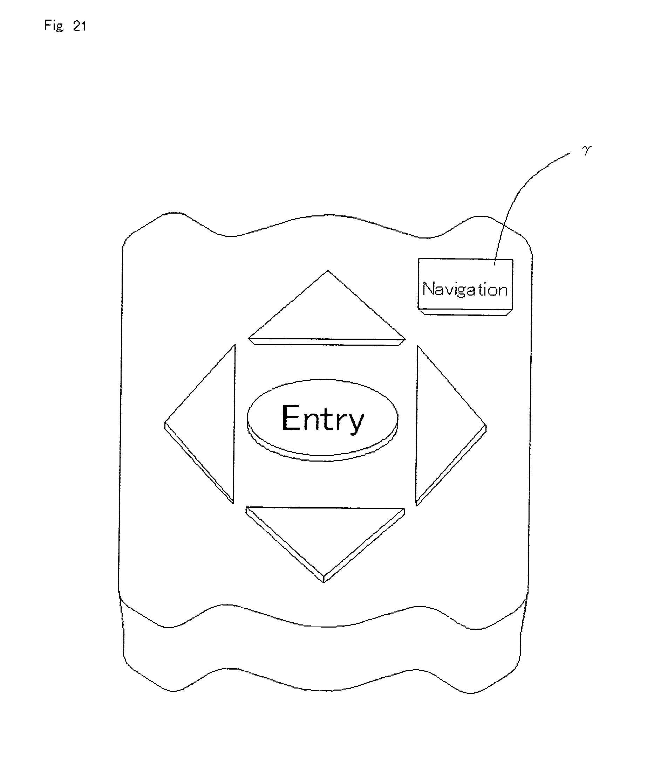

Fig. 21 is a diagram showing a simple remote control as an example of an input device for operating an integrated interface device of a fifth embodiment. As shown in Fig. 15, the remote control of the integrated interface device of the fifth embodiment is equipped with navigation (activation) button γ in addition to the arrow keys and the entry button β. In the integrated interface device of a fifth embodiment, press of the navigation (activation) button triggers the display of the navigation window frame of the fourth embodiment.

### <Functional Configuration of Fifth Embodiment>

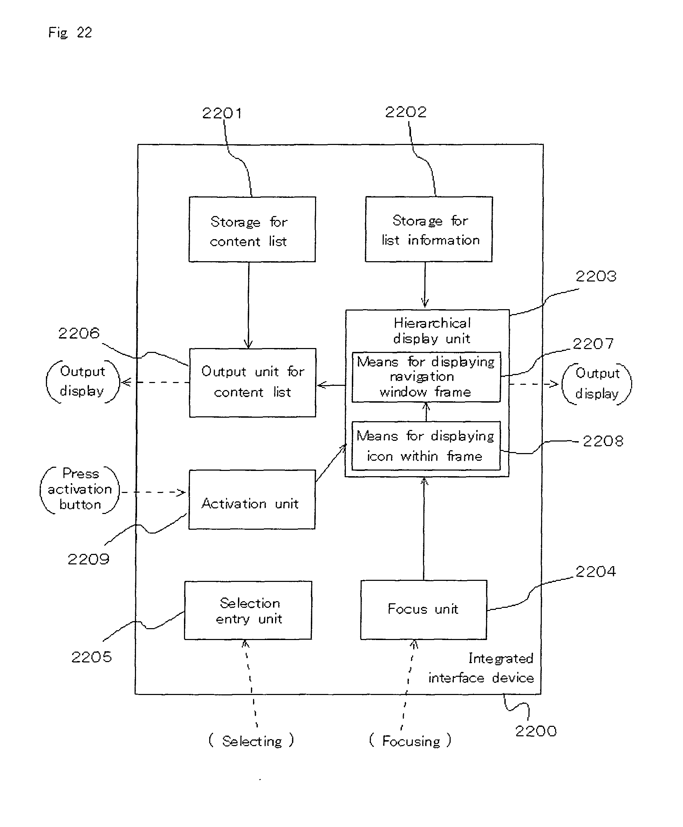

Fig. 22 is a functional block diagram of the integrated interface device of the fifth embodiment. As shown in Fig. 22, the 'integrated user interface device' (2200) of the fifth embodiment is based on the fourth embodiment, and comprises a 'storage for content list' (2201), a 'storage for list information' (2202), a 'hierarchical display unit' (2203), a 'focus unit' (2204), a 'selection unit' (2205), an 'output unit for content list' (2206), 'means for displaying navigation window frame' (2207), and 'means for displaying icon within frame' (2208). Moreover, the integrated interface device of the fifth embodiment is based on the second or third embodiment, and may comprise the 'means for receiving graphic instruction', the 'means for displaying options in the same hierarchy', the 'means for displaying along edge', the 'means for receiving selection entry of edge', the 'means for direction key' and the 'means for entry button', which are not indicated in diagrams. Note that, these components have already been described in the first embodiment, so that descriptions are omitted. Moreover, the integrated interface device of the fifth embodiment further comprises an 'activation unit' (2209).

The 'activation unit' (2209) includes an activation button for activating the means for displaying navigation window frame and the means for displaying icon within frame, and for example, can be implemented by a predetermined button as shown in Fig. 21, provided on the remote control or other input device. Thus, the integrated interface device of the fifth embodiment can execute display of the navigation window frame and display of the icon within the frame by the navigation activation button. Moreover, as described in the below, by adding various functions to the navigation button, it is possible to execute various operations by the input device having simple configuration.

### <Processing Flow of Fifth Embodiment>

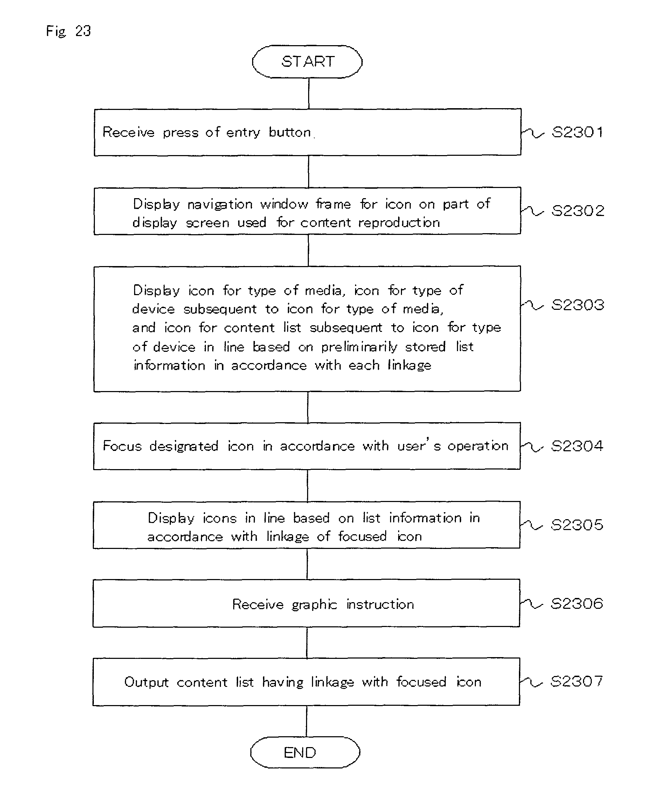

Fig. 23 is a flowchart showing processes in the integrated interface device of the fifth embodiment. Note that, the following step may be executed by the respective hardware configurations of a computer as the above, or may configure a program, which is stored in a medium and is for controlling the computer. As shown in Fig. 23, at the outset, press of the navigation activation button is received (step S2301). Subsequently, the navigation window frame for icon on part of display screen used for content reproduction is displayed (step S2302). Subsequently, display of the icon for type of media, icon for type of device subsequent to icon for type of media, and icon for content list subsequent to icon for type of device in line are executed based on the preliminarily stored list information in accordance with each linkage (step S2303). Subsequently, focus of designated icon is executed in accordance with the user's operation (step S2304), and display of icons in line is newly executed based on the list information in accordance with the linkage of the focused icon (step S2305). Subsequently, after repetition of newly displaying icons in a line as shown in the above steps S2304 and 2305 in response to the user's focus operation, the selection entry of the focused icon is received through the entry button provided with the input device (step S2306). Subsequently, the content list having linkage with the selected icon is outputted (step S2307).

### <Brief Description of Effects of Fifth Embodiment>

According to the integrated interface device of the fifth embodiment, press of the navigation activation button triggers the display of the navigation window frame and display of the icon within the frame.

### <<Sixth Embodiment>>

### <Concept of Sixth Embodiment>

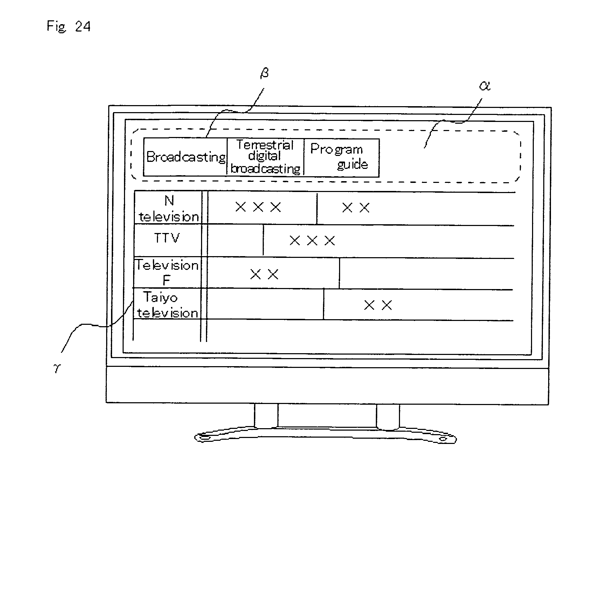

Fig. 24 is a diagram showing an example of a screen on a display of an integrated interface device of a sixth embodiment. As shown in Fig. 24, in the integrated interface device of the sixth embodiment based on the above embodiment, at the outset, the navigation window frame α is displayed, and the icon row β is displayed within the frame. Moreover, in the integrated interface device of the sixth embodiment, in addition to the above, the display area excluding the navigation window frame is secured as a frame γ for output of the content list.

### <Functional Configuration of Sixth Embodiment>

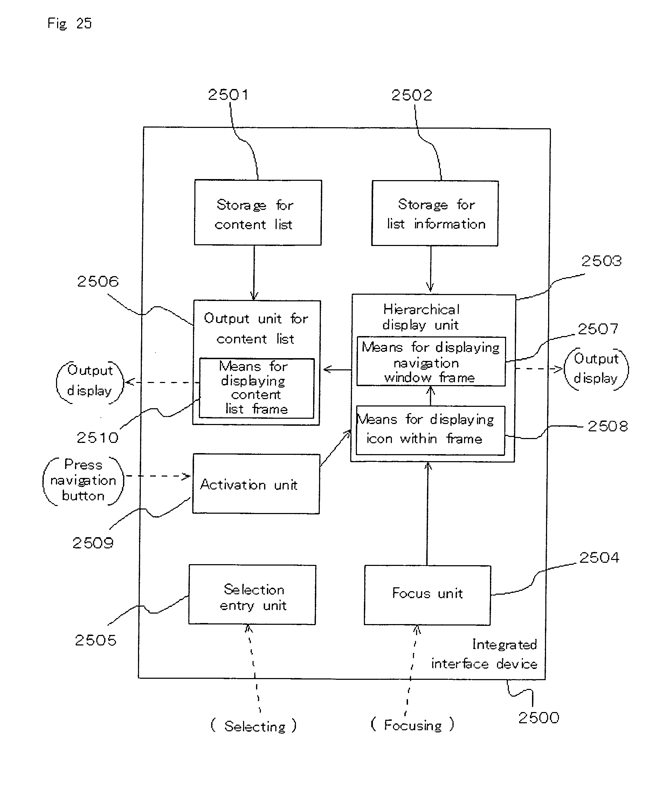

Fig. 25 is a functional block diagram of the integrated interface device of the sixth embodiment. As shown in Fig. 25, the 'integrated user interface device' (2500) of the sixth embodiment is based on the fifth embodiment, and comprises a 'storage for content list' (2501), a 'storage for list information' (2502), a 'hierarchical display unit' (2503), a 'focus unit' (2504), a 'selection unit' (2505), and an 'output unit for content list' (2506), 'means for displaying navigation window frame' (2507), 'means for displaying icon within frame' (2508), and an 'activation unit' (2509). Moreover, the integrated interface device of the sixth embodiment is based on the second or third embodiment, and may comprise the 'means for receiving graphic instruction', the 'means for displaying options in the same hierarchy', the 'means for displaying along edge', the 'means for receiving selection entry of edge', the 'means for direction key' and the 'means for entry button', which are not indicated in diagrams. Note that, these components have already been described in the first embodiment, so that descriptions are omitted. Moreover, the integrated interface device of the sixth embodiment further comprises 'means for displaying content list frame' (2510).

The 'means for displaying content list frame' (2510) has a function of displaying a content list frame for the content list on a portion of the display screen used for the content reproduction excluding the navigation window frame. Thus, the icon is displayed within the navigation window frame on the display screen, and the content list is displayed within the content list frame other than the window frame, thereby easily switching the navigation operation using the icon and the selection of the content such as reproduction using the content list with respect to each window frame.

### <Processing Flow of Sixth Embodiment>

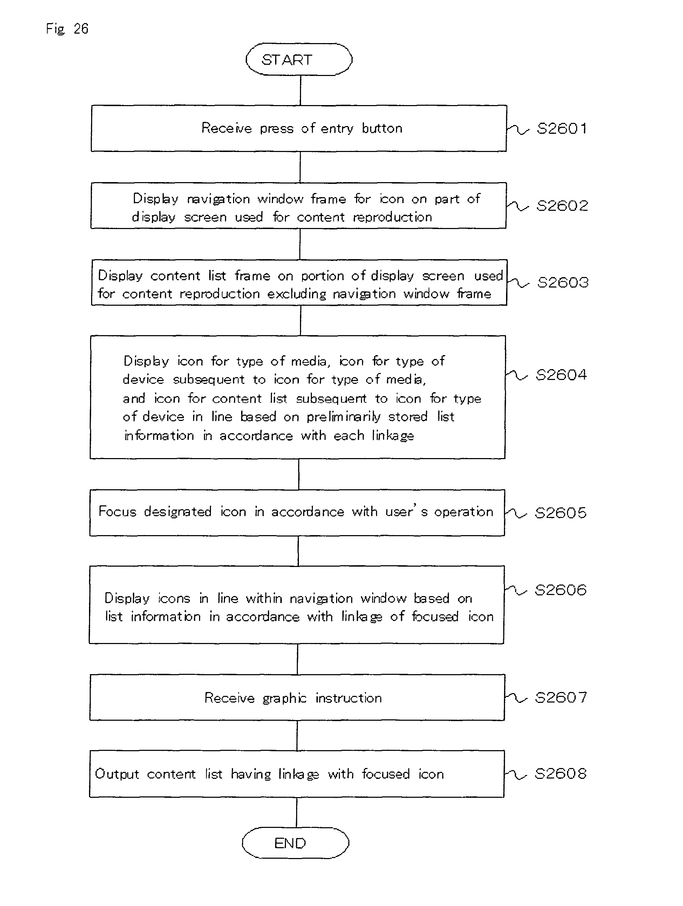

Fig. 26 is a flowchart showing processes in the integrated interface device of the sixth embodiment. Note that, the following step may be executed by the respective hardware configurations of a computer as the above, or may configure a program, which is stored in a medium and is for controlling the computer. As shown in Fig. 26, at the outset, press of the navigation activation button is received (step S2601). Subsequently, the navigation window frame for icon on part of display screen used for content reproduction is displayed (step S2602). Subsequently, the content list frame is displayed on the portion of the display screen used for the content reproduction excluding the navigation window frame (step S2603). Subsequently, display of the icon for type of media, icon for type of device subsequent to icon for type of media, and icon for content list subsequent to icon for type of device in line are executed based on the preliminarily stored list information in accordance with each linkage (step S2604). Subsequently, focus of designated icon is executed in accordance with the user's operation (step S2605), and display of icons in line is newly executed based on the list information in accordance with the linkage of the focused icon (step S2606). Subsequently, after repetition of newly displaying icons in a line as shown in the above steps S2605 and 2606 in response to the user's focus operation, the selection entry of the focused icon is received through the entry button provided with the input device (step S2607). Subsequently, the content list having linkage with the selected icon is outputted (step S2608).

### <Brief Description of Effects of Sixth Embodiment>

According to the integrated interface device of the sixth embodiment, the content list frame can be displayed on the portion of the display screen used for the content reproduction excluding the navigation window frame. Moreover, the icon is displayed within the navigation window frame on the display screen, and the content list is displayed within the content list frame other than the window frame, thereby easily switching the navigation operation using the icon and the selection of the content such as reproduction using the content list with respect to each window frame.

### <<Seventh Embodiment>>

### <Concept of seventh Embodiment>

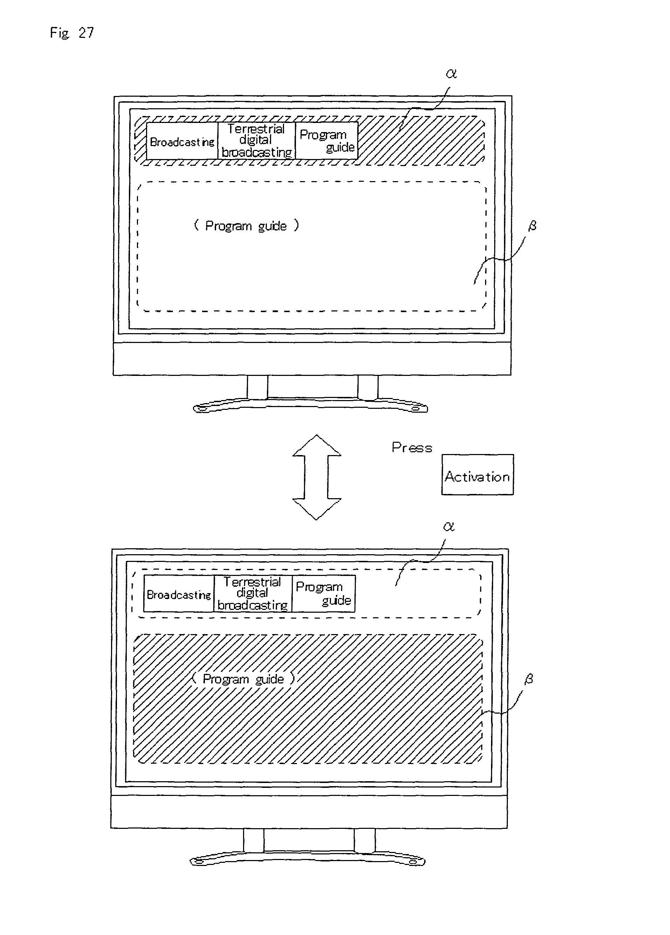

Fig. 27 is a diagram showing an example of change of a screen by operation using an activation button for navigation of an integrated interface device of a seventh embodiment. As shown in Fig. 27, for example, from the navigation window frame α and the content list frame β, the navigation window frame α is managed and controlled as an active window frame and as an operation target for the input device. Therefore, in this state, when operating the arrow key or the entry button, which are provided on the remote control as shown in Fig. 21, the operation is processed as focusing or selecting operation for the icon within the active frame.

Moreover, in the seventh embodiment, when pressing the navigation activation button, switching of the active frame is executed. Therefore, in this state, upon pressing the navigation button, the content list frame becomes active, and operation of the button of the remote control is processed as the selection operation for the content in the content list.

### <Functional Configuration of Seventh Embodiment>

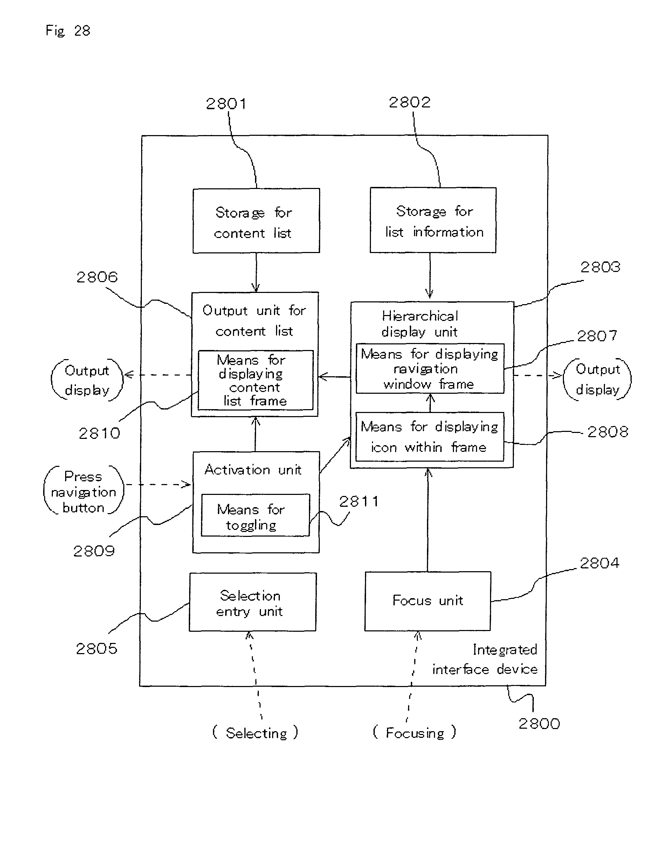

Fig. 28 is a functional block diagram of the integrated interface device of the seventh embodiment. As shown in Fig. 28, the 'integrated user interface device' (2800) of the seventh embodiment is based on the sixth embodiment, and comprises a 'storage for content list' (2801), a 'storage for list information' (2802), a 'hierarchical display unit' (2803), a 'focus unit' (2804), a 'selection unit' (2805), and an 'output unit for content list' (2806), 'means for displaying navigation window frame' (2807), 'means for displaying icon within frame' (2808), an 'activation unit' (2809), and a 'means for displaying content list frame' (2810). Moreover, the integrated interface device of the seventh embodiment is based on the second or third embodiment, and may comprise the 'means for receiving graphic instruction', the 'means for displaying options in the same hierarchy', the 'means for displaying along edge', the 'means for receiving selection entry of edge', the 'means for direction key' and the 'means for entry button', which are not indicated in diagrams. Note that, these components have already been described in the first embodiment, so that descriptions are omitted. Moreover, in the integrated interface device of the seventh embodiment, the activation unit further comprises 'means for toggling' (2811).

The 'means for toggling' (2811) functions the activation button such that an active window for the operation of the direction key is selected through toggle selection when the navigation window frame and the content list frame are simultaneously displayed. Therefore, in the integrated interface device of the seventh embodiment, due to the focusing or selecting operation for the icon displayed within the active frame, the navigation window frame becomes active, thereby enabling the operation of icon within the frame. Therefore, since the operation of icon within the frame becomes possible by pressing the 'navigation activation button', the operation is intuitively known for the user. Moreover, in the integrated interface device of the seventh embodiment, since the content list is activated by toggle switching, the operation is intuitively known for the user, and it is possible to provide the input device having simple configuration with a small number of buttons by reducing a switching button.

### <Processing Flow of Seventh Embodiment>

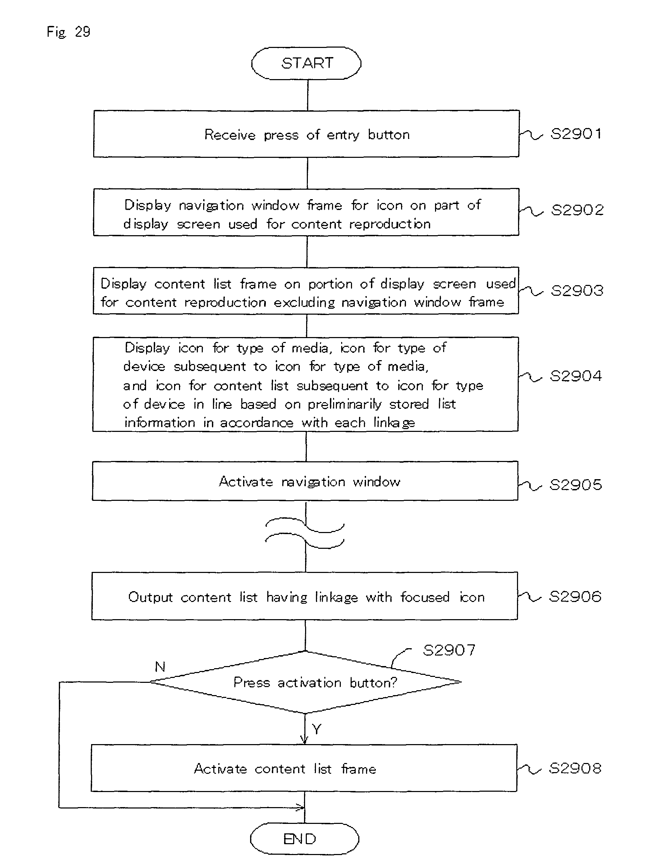

Fig. 29 is a flowchart showing processes in the integrated interface device of the seventh embodiment. Note that, the following step may be executed by the respective hardware configurations of a computer as the above, or may configure a program, which is stored in a medium and is for controlling the computer. As shown in Fig. 29, at the outset, press of the navigation activation button is received (step S2901). Subsequently, the navigation window frame for icon on part of display screen used for content reproduction is displayed (step S2902). Subsequently, the content list frame is displayed on the portion of the display screen used for the content reproduction excluding the navigation window frame (step S2903). Subsequently, display of the icon for type of media, icon for type of device subsequent to icon for type of media, and icon for content list subsequent to icon for type of device in line are executed based on the preliminarily stored list information in accordance with each linkage (step S2904). Moreover, the navigation window frame is activated so as to be a target for button operation (step S2905). The focusing and selecting operation as shown in Fig. 26 are processed as operations for the icon within the active navigation window frame.

Subsequently, the selection entry of the focused icon is received, and the content list having linkage with the selected icon is outputted (step S2906). Here, the press of the activation button is received (step S2907), the content list frame is activated, and control is executed such that the operation by the direction key etc. is effective (step S2908).

### <Brief Description of Effects of Seventh Embodiment>

According to the integrated interface device of the seventh embodiment, the press of the activation button triggers the toggle switching of the activation of the navigation window frame or the content list frame. Therefore, it is possible to provide the input device having simple configuration with a small number of buttons by reducing a switching button.

### <<Eighth Embodiment>>

### <Concept of eighth Embodiment>

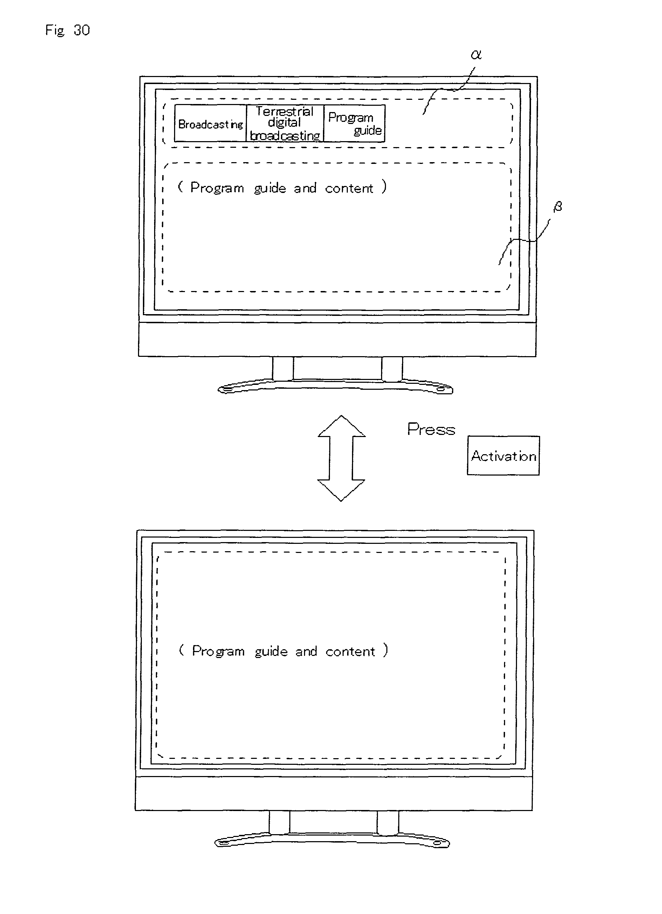

Fig. 30 is a diagram showing an example of change of a screen by operation using an activation button for navigation of an integrated interface device of an eighth embodiment. As shown in Fig. 30, for example, the navigation window frame α and the content list frame β are displayed on the display screen. In this state, when pressing the navigation activation button as shown in Fig. 21, the navigation window frame and the icons within the frame are deleted.

### <Functional Configuration of Eighth Embodiment>

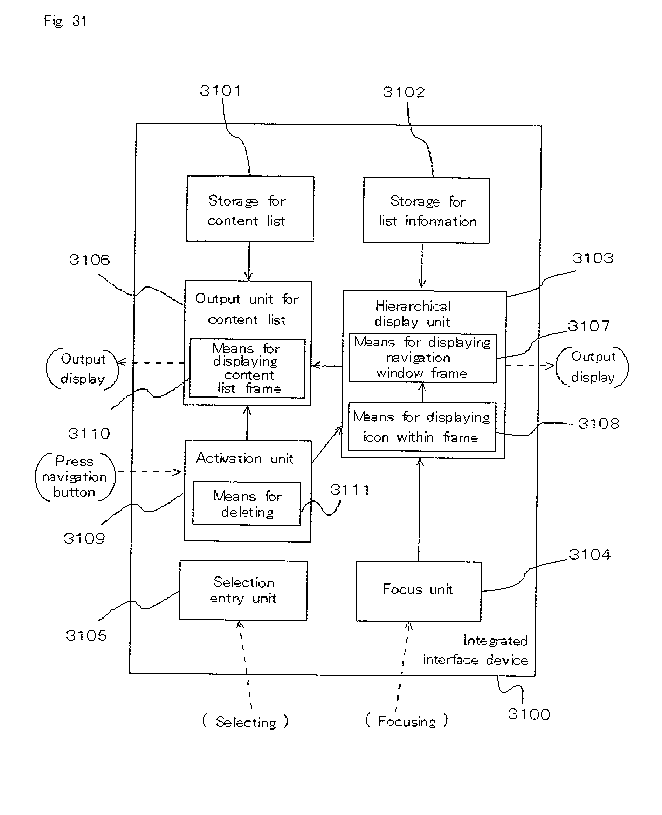

Fig. 31 is a functional block diagram of the integrated interface device of the eighth embodiment. As shown in Fig. 31, the 'integrated user interface device' (3100) of the eighth embodiment is based on the sixth embodiment, and comprises a 'storage for content list' (3001), a 'storage for list information' (3102), a 'hierarchical display unit' (3103), a 'focus unit' (3104), a 'selection unit' (3105), and an 'output unit for content list' (3106), 'means for displaying navigation window frame' (3107), 'means for displaying icon within frame' (3108), an 'activation unit' (3109), and a 'means for displaying content list frame' (3110). Moreover, the integrated interface device of the eighth embodiment may comprise the above-described components, which are not indicated in diagrams, based on other embodiments. Note that, these components have already been described in the above embodiment, so that descriptions are omitted. Moreover, in the integrated interface device of the eighth embodiment, the activation unit further comprises 'means for deleting' (3111).

The 'means for deleting' (3111) functions the activation button to delete the navigation window frame and the icon within frame when the navigation window frame for the icon is displayed on the part of the display screen used for the content reproduction. Thus, it is possible to delete the navigation window frame and the icons within the frame by the activation button, so that it is possible to provide the input device having simple configuration with a small number of buttons by reducing a switching button.

### <Processing Flow of Eighth Embodiment>

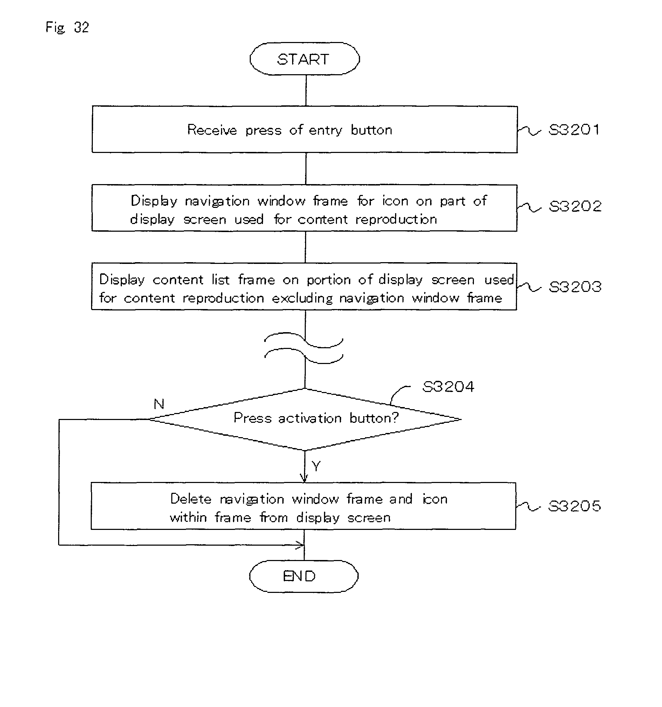

Fig. 32 is a flowchart showing processes in the integrated interface device of the eighth embodiment. Note that, the following step may be executed by the respective hardware configurations of a computer as the above, or may configure a program, which is stored in a medium and is for controlling the computer. As shown in Fig. 32, at the outset, press of the navigation activation button is received (step S3201). Subsequently, the navigation window frame for icon on part of display screen used for content reproduction is displayed (step S3202). Subsequently, the content list frame is displayed on the portion of the display screen used for the content reproduction excluding the navigation window frame (step S3203). Subsequently, the focusing and selecting operation as shown in Fig. 26 are received.

Subsequently, the selection entry of the focused icon is received, and the content list having linkage with the selected icon is outputted. Here, when the navigation activation button is pressed (step S3204), the navigation window frame and the icons within the frame are deleted from the display screen (step S3205).

### <Brief Description of Effects of Eighth Embodiment>

According to the integrated interface device of the eighth embodiment, the press of the activation button triggers the deletion of the activation of the navigation window frame and the content list frame. Therefore, it is possible to provide the input device having simple configuration with a small number of buttons by reducing a delete button.

### <<Ninth Embodiment>>

### <Concept of Ninth Embodiment>

An integrated interface device of a ninth embodiment is based on the above embodiment, and preliminarily determines the icon to be focused by default upon activation by the following process. Specifically, in the ninth embodiment, the icon lastly focused is set as a default focus position next time.

### <Functional Configuration of Ninth Embodiment>

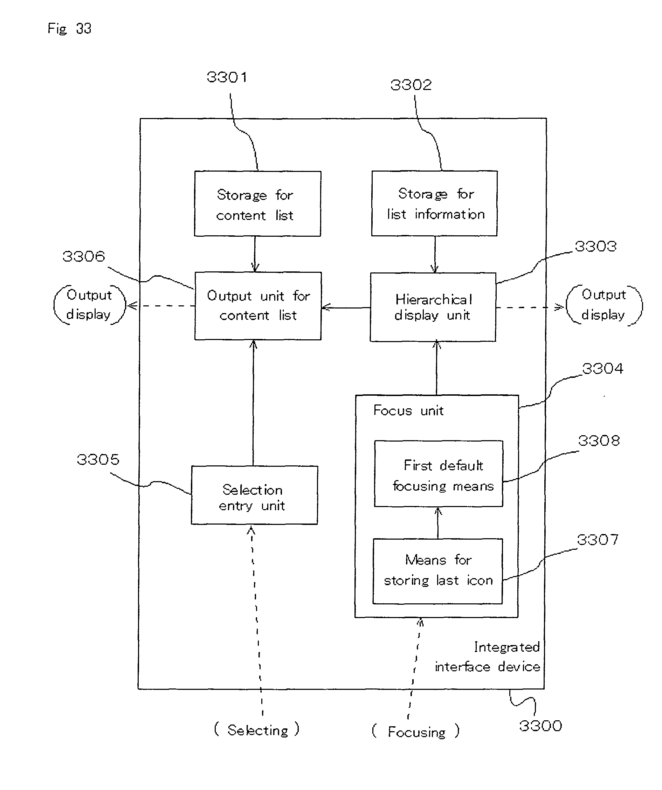

Fig. 33 is a functional block diagram of the integrated interface device of the ninth embodiment. As shown in Fig. 33, the 'integrated user interface device' (3300) of the ninth embodiment is based on the first embodiment, and comprises a 'storage for content list' (3301), a 'storage for list information' (3302), a 'hierarchical display unit' (3303), a 'focus unit' (3304), a 'selection unit' (3305), and an 'output unit for content list' (3306). Moreover, the integrated interface device of the ninth embodiment may comprise the above-described components, which are not indicated in diagrams, based on other embodiments. Note that, these components have already been described in the above embodiment, so that descriptions are omitted. Moreover, in the integrated interface device of the ninth embodiment, the focus unit further comprises 'means for storing last icon' (3307), and 'first default focusing means' (3308).

The 'means for storing last icon' (3307) has a function of storing the icon lastly focused, and for example, can be implemented by various storage mediums such as the flash memory. Specifically, identification information of the icon newly focused by the focus unit is written or overwritten in chronological order in the flash memory etc, thereby storing the lastly focused icon.

The 'first default focusing means' (3308) has a function of focusing the icon stored by the means for storing last icon by default, and for example, can be implemented by calculation device such as the CPU. Note that the 'focus by default' means a preliminary focus in the state that the user's focus operation after activation of the device is not received yet. Therefore, this icon focused by default is set as the lastly focused icon, thereby simplifying the initial user's operation.

### <Processing Flow of Ninth Embodiment>

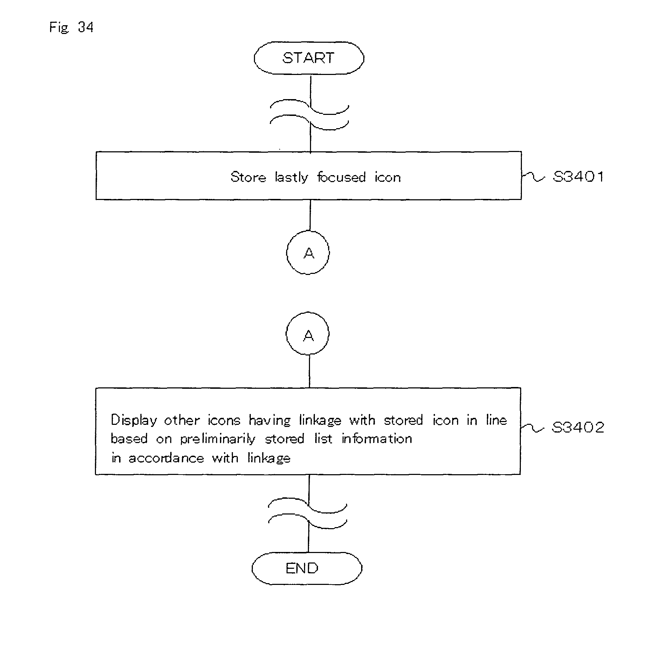

Fig. 34 is a flowchart showing processes in the integrated interface device of the ninth embodiment. Note that, the following step may be executed by the respective hardware configurations of a computer as the above, or may configure a program, which is stored in a medium and is for controlling the computer. As shown in Fig. 34, at the outset, according to the processes described in Fig. 8, the display of icons in a line having linkage, the focusing and selecting operation for icon in response to the user's input operation, and the output of the content list are executed. Subsequently, the lastly focused icon upon power-off etc. is stored in the storage medium (step S3401). After that, when the device is reactivated by power-on etc, based on the preliminarily stored list information, the icon stored in the step S3402, and other icons having linkage with the icon are displayed in a line in accordance with the linkage (step S3402).

### <Brief Description of Effects of Ninth Embodiment>

According to the integrated interface device of the ninth embodiment, the icon lastly focused can be set as the initially focused next time by default, thereby simplifying the initial user's operation.

### <<Tenth Embodiment>>

### <Concept of Tenth Embodiment>

An integrated interface device of a tenth embodiment is also based on the above embodiment, and preliminarily determines the icon to be focused by default upon activation by the following process. Specifically, in the tenth embodiment, the selection history information of the icon focused upon selection by the selection entry unit is acquired. Subsequently, for example, the history information is analyzed, so that the icon of the largest number of selections among the icons selected by the user is set as the default focus position.

### <Functional Configuration of Tenth Embodiment>

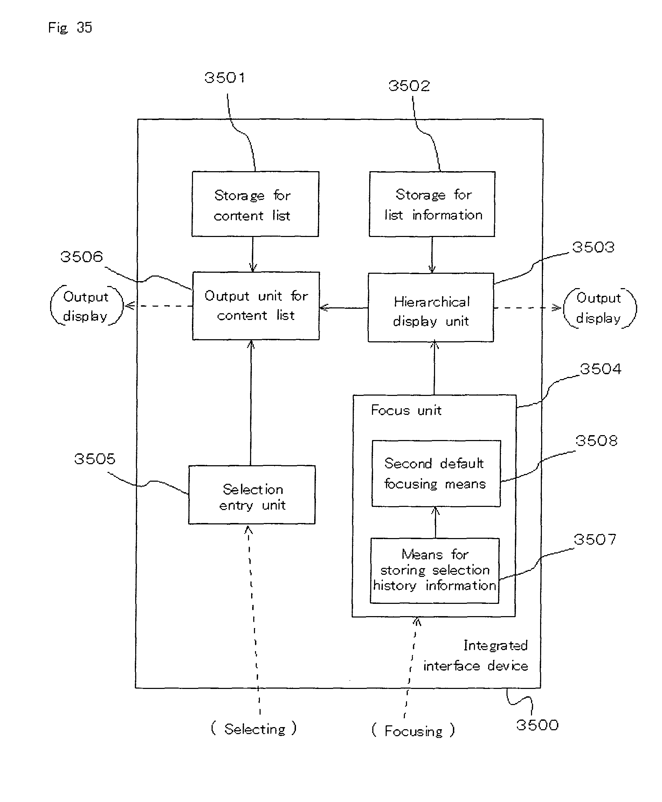

Fig. 35 is a functional block diagram of the integrated interface device of the tenth embodiment. As shown in Fig. 35, the 'integrated user interface device' (3500) of the tenth embodiment is based on the first embodiment, and comprises a 'storage for content list' (3501), a 'storage for list information' (3502), a 'hierarchical display unit' (3503), a 'focus unit' (3504), a 'selection unit' (3505), and an 'output unit for content list' (3506). Moreover, the integrated interface device of the tenth embodiment may comprise the above-described components, which are not indicated in diagrams, based on other embodiments. Note that, these components have already been described in the above embodiment, so that descriptions are omitted. Moreover, in the integrated interface device of the tenth embodiment, the focus unit further comprises 'means for storing selection history information' (3507), and 'second default focusing means' (3508).

The 'means for storing selection history information' (3507) has a function of storing selection history information of the icon as a target for the selection by the selection entry unit, and for example, can be implemented by various storage mediums such as the flash memory. Specifically, identification information of the icon focused upon selection by the selection entry unit is sequentially written in the flash memory etc, thereby storing the selection history information of the icon.

The 'second default focusing means' (3508) has a function of focusing the icon determined based on the stored selection history information by default, and for example, can be implemented by calculation device such as the CPU. The terms 'determined based on the selection history information' means, for example, the number is calculated with respect to each icon, so that the icon of the largest number of selections is determined as the icon to be focused by default. Moreover, for example, 'information of date and time of the selection of the icon' is added and stored as the selection entry information, thereby counting the number of selections of the icon with respect to each predetermined date and time. Therefore, when executing the determination process based on the selection history information, the current time is acquired from the built-in clock, and the icon, mostly selected in the nearest time slot is determined as the target icon for the default focus.

### <Processing Flow of Tenth Embodiment>

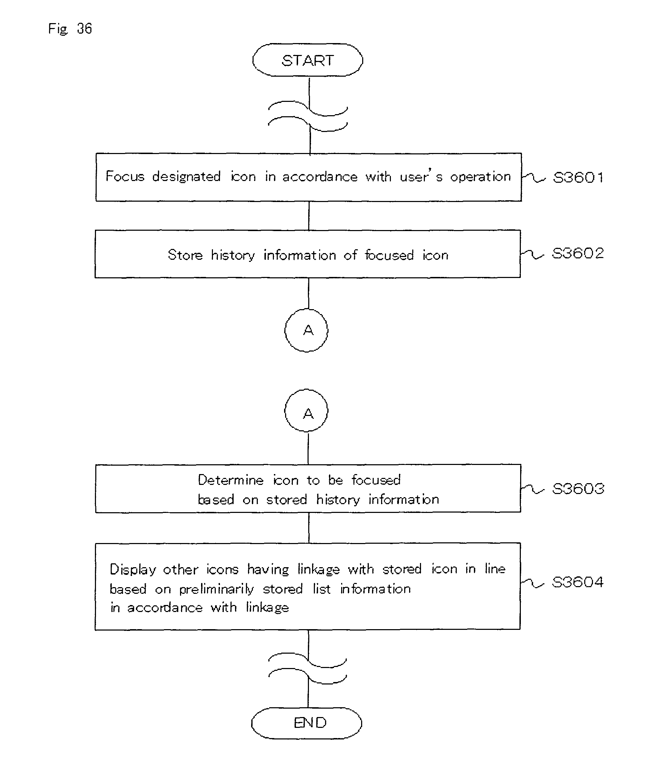

Fig. 36 is a flowchart showing processes in the integrated interface device of the tenth embodiment. Note that, the following step may be executed by the respective hardware configurations of a computer as the above, or may configure a program, which is stored in a medium and is for controlling the computer. As shown in Fig. 36, at the outset, according to the processes described in Fig. 8, the display of icons in a line having linkage are displayed in a line, and the icon is focused in response to the user's input operation (S3601), and the focused icon is stored in the storage medium as the selection history information (step S3602). After that, when the device is reactivated by power-on etc, based on the stored selection history, the icon to be focused by default is determined (step S3603). Subsequently, based on the preliminarily stored list information, the determined icon, and other icons having linkage with the icon are displayed in a line in accordance with the linkage (step S3604).

### <Brief Description of Effects of Tenth Embodiment>

According to the integrated interface device of the tenth embodiment, it is possible to determine the icon to be focused by default using the selection history information of the icon focused upon selection, thereby simplifying the initial user's operation.

### <<Eleventh Embodiment>>

### <Concept of Eleventh Embodiment>

An integrated interface device of an eleventh embodiment is based on the above embodiment, and using the direction key described in the third embodiment, it is possible to move the focus of GUI (hierarchical navigation), configured by icons such as the type of media icon and the type of device icon. Moreover, it is possible to carry out selection of the content in the content list such as the program guide, displayed for selection after the focus operation of icon GUI, by utilizing the same direction key.

### <Functional Configuration of Eleventh Embodiment>

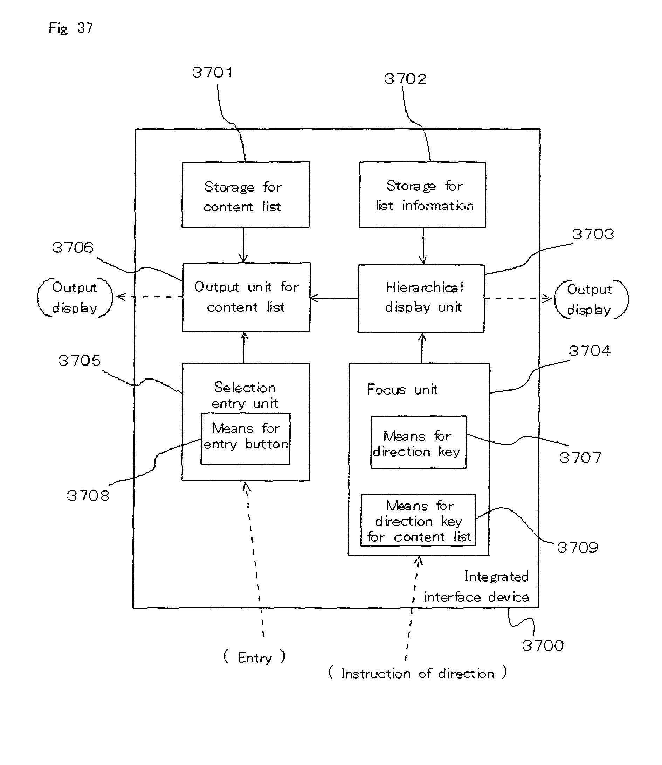

Fig. 37 is a functional block diagram of the integrated interface device of the eleventh embodiment. As shown in Fig. 37, the 'integrated user interface device' (3700) of the eleventh embodiment is based on the third embodiment, and comprises a 'storage for content list' (3701), a 'storage for list information' (3702), a 'hierarchical display unit' (3703), a 'focus unit' (3704), a 'selection unit' (3705), an 'output unit for content list' (3706), and 'means for direction key' (3707) and/or 'means for entry key' (3708). Moreover, the integrated interface device of the eleventh embodiment may comprise the above-described components, which are not indicated in diagrams, based on other embodiments. Note that, these components have already been described in the above embodiment, so that descriptions are omitted. Moreover, in the integrated interface device of the eleventh embodiment, the focus unit further comprises 'means for direction key for content list' (3709), utilizing same direction key as that of the means for direction key.

The 'means for direction key for content list' (3709) has a function of focusing on content identification indication included in the content list outputted by the output unit for content list, and function of moving the focus among the content identification indications, and for example, can be implemented by the CPU and the main memory, and the direction key provided on the input device and a program for direction key for content list.

Specifically, the content list is the GUI, in which a group of a plurality of content identification indications as selection targets such as the program guide or recording list are listed using various styles such as itemization or icon indication, and are displayed. The user selects the desired content from the content list, and does operations, for example, entering the content to be viewed or programming of recording. Moreover, the means for direction key for content list has a function of moving the focus to select one content identification indication among the plurality of the content identification indications in the list. Moreover, in the means for direction key for content list, the input operation for the moving is implemented by the direction key in Fig. 15 of the third embodiment. Therefore, the means for direction key for content list utilizes the same direction key as that of the means for direction key.

### <Another Functional Configuration of Eleventh Embodiment>

In order to operate the hierarchical interface (hierarchical navigation) in Fig. 9 by the means for hierarchical display, and the content list such as the program guide by utilizing the one direction key, the integrated interface device of the eleventh embodiment has the following configuration, and may have the function to sort the above operations.

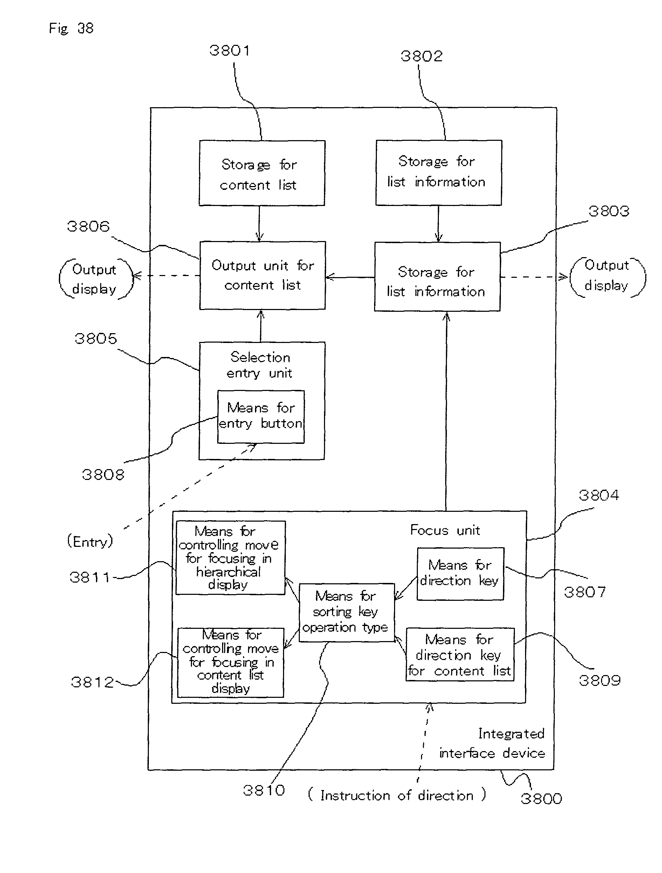

Fig. 38 is a functional block diagram of the integrated interface device of the eleventh embodiment having the function of sorting the both operations. As shown in Fig. 38, the 'integrated user interface device' (3800) of the eleventh embodiment is based on the third embodiment, and comprises a 'storage for content list' (3801), a 'storage for list information' (3802), a 'hierarchical display unit' (3803), a 'focus unit' (3804), a 'selection unit' (3805), an 'output unit for content list' (3806), and 'means for direction key' (3807) and/or 'means for entry key' (3808), and 'means for hierarchical display' (3809). Moreover, in the integrated interface device of the eleventh embodiment, the focus unit further comprises 'means for sorting key operation type' (3810), 'means for controlling move for focusing in hierarchical display' (3811), and 'means for controlling move for focusing in content list display' (3812).

The 'means for sorting key operation type' (3810) has a function of determining which unit executes the display of interface, the hierarchical display unit or the output unit for content list, and for example, can be implemented by the CPU, the main memory, and a program for sorting key operation type. Specifically, for example, flag information, indicating which program is currently executed by the CPU for displaying the GUI, 'program for the hierarchical display unit' or the 'program for the output unit for content list', is stored in the main memory etc. Subsequently, when receiving the input of the direction key through the input device, with reference to the flag information, it is determined which component executes the display as the interface.

The 'means for controlling move for focusing in hierarchical display' (3811) has a function of acquiring all or part of the list information from the storage for list information, and controlling the move for focusing based on the direction key operation, when the determination result by the means for determining key operation type indicates that the display is executed by the hierarchical display unit, and for example, can be implemented by the CPU, the main memory, and a program for controlling move for focusing in hierarchical display. Specifically, when it is determined that the display of GUI is executed by the hierarchical display unit, for example, if an operation of the down button of the direction key is received in the state in Fig. 4 that the 'broadcasting' is focused on, the focus is moved onto the 'iLink', and the 'AVHDD' icon and the 'recording list' icon, which have linkage in the upper row, are acquired and displayed on the screen as shown in Fig. 6(b). Moreover, the parameter information, indicating that the content list currently focused is the 'recording list' of the 'AVHDD' connected to the 'iLink', is acquired.

Moreover, in the above display of the icon row, when the movement control of focus in response to the direction key is executed as shown in Fig. 6(b), only the icon row including the focused icon may be displayed, and icons in other vertical and/or horizontal line may not be displayed. According to this configuration, the icons are displayed in a line excluding the case that other icons are displayed in a horizontal line (perpendicular to a vertical line) for the focused icon to be selected, thereby efficiently using the display screen.

The 'means for controlling move for focusing in content list display' (3812)' has a function of acquiring all or part of the list information from the storage for list information, and controlling the move for focusing based on the direction key operation, when the determination result by the means for determining key operation type indicates that the display is executed by the output unit for content list, and for example, can be implemented by the CPU, the main memory, and a program for controlling move for focusing in content list. Specifically, when it is determined that the display of GUI is executed by the output unit for content, for example, if an operation of the direction key is received, the control of movement of focus among the frames is executed such that the desired program content (frame) in the program guide in Fig. 3(a) is selected. Subsequently, as described below, when the 'entry button' is pressed, as shown in Fig. 3(b), the detailed information of the focused program content may be displayed, or viewing/program or execution of recording/programming of recording of the content may be executed.

### <Hardware Configuration of Eleventh Embodiment>

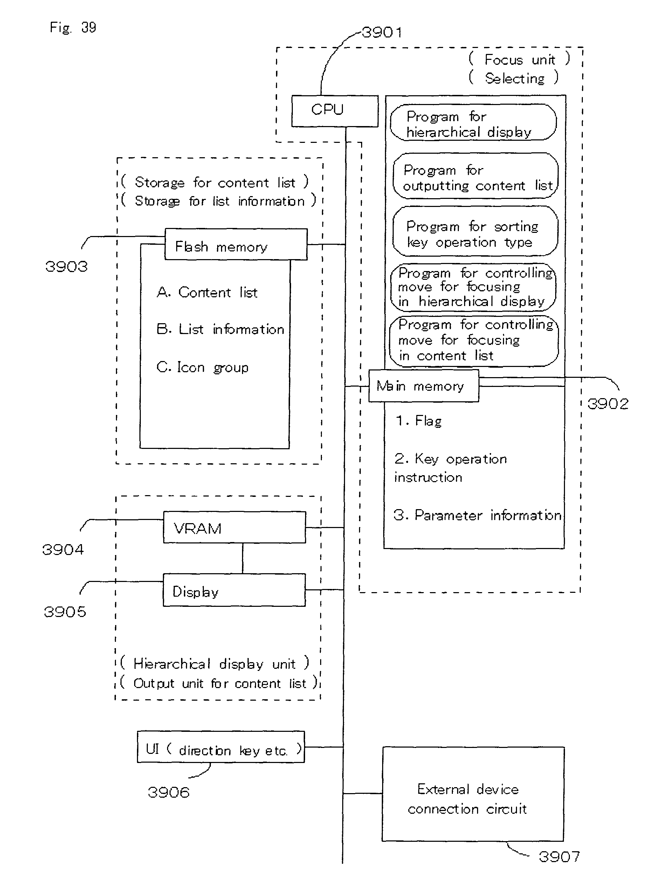

Fig. 39 is a diagram showing an example of a hardware configuration of the integrated interface device of the eleventh embodiment. As shown in Fig. 39, the integrated interface device is provided with a 'CPU' (3901), a 'main memory' (3902), a 'flash memory' (3903), a 'VRAM' (3904), 'display' (3905) and a 'UI (User Interface)' (3906) as described in the first embodiment. Moreover, the UI is a remote control transmitter/receiver, and provided with the 'direction key' and 'entry button'. Moreover, as described above, an 'external device connection circuit', a plurality of 'broadcast receiving tuners' and an 'internet connection circuit' may be provided. These components are mutually connected through the data communication path of 'system bus' etc, thereby carrying out transmission/reception and processing of the information.

Here, when the program for hierarchical display is currently executed by the integrated interface device, and when the GUI as shown in Fig. 6, in which the icons are arranged, is displayed on the 'display', the 'CPU' stores a first flag indicating the hierarchical display at an address 1 in the 'main memory' in accordance with the interpretation by a program for sorting key operation type. when the program for outputting content is currently executed by the integrated interface device, and when the GUI as shown in Fig. 3, which is the content list such as the program guide, is displayed on the 'display', the 'CPU' stores a second flag indicating the output of the content list at the address 1 in the 'main memory' in accordance with the interpretation by a program for sorting key operation type.

Subsequently, in the state that any one of the GUI is displayed on the 'display', when the user presses the direction key of the remote control transmitter (UI), the integrated interface device of the eleventh embodiment receives the operation instruction by the receiver (UI), and demodulates and stores it at an address 2 in the 'main memory'. Subsequently, the 'CPU' refers the flag information stored at the address 1 in the 'main memory' in accordance with the interpretation by a program for sorting key operation type. If the first flag is stored, this means that the GUI display of the hierarchy of the icons is executed, so that the 'CPU' reads out and interprets the program for controlling move for focusing in hierarchical display. Subsequently, based on the interpretation, the 'CPU' moves the focus among icons in accordance with the operation instruction for the direction key stored at the address 2 in the 'main memory', refers the list information stored in the 'flash memory', and acquires the icons of a row having the linkage with the focused icon. Subsequently, the acquired icons of the row are displayed on the display screen through the 'VRAM'. Moreover, the parameter information indicating the content list of the row currently focused is acquired, and stored at an address 3 in the 'main memory'. Therefore, it is possible to output the content list in accordance with the parameter information indicating the content list when any icon is focused.

Meanwhile, when the second flag is stored in the 'main memory' as a result of the reference of the flag information in accordance with the interpretation by a program for sorting key operation type, this means that the GUI display of the content list is executed, so that the 'CPU' reads out and interprets the program for controlling move in content list. Subsequently, based on the interpretation, the 'CPU' moves the focus among contents in the content list in accordance with the operation instruction for the direction key stored at the address 2 in the 'main memory'. Here, when receiving the operation signal indicating the press of the 'entry button' by the 'UI', the detailed information of the program content currently focused may be acquired from the 'flash memory', and may be displayed. Alternatively, viewing/programming of viewing or recording/programming of recording of the content may be executed.

### <Processing Flow of Eleventh Embodiment>

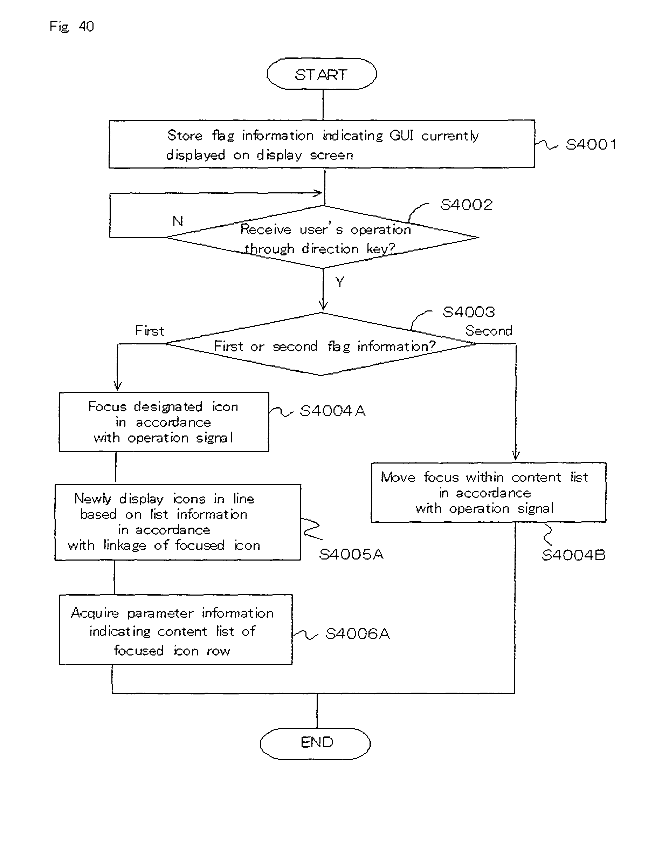

Fig. 40 is a flowchart showing processes in the integrated interface device of the eleventh embodiment. Note that, the following step may be executed by the respective hardware configurations of a computer as the above, or may configure a program, which is stored in a medium and is for controlling the computer. As shown in Fig. 40, at the outset, the flag information, the information indicating that the icons such as the icon of media type is displayed in a line based on the list information (the first flag), or the information indicating that the content list is outputted and displayed (the second flag), is stored in the main memory (step S4001). Subsequently, the user's operation using the direction key provided on the input device is received (step S4002), and the stored flag information is referred (step S4003). If the first flag is stored, in accordance with the operation instruction, the designated icon is focused (step S4004A), and based on the list information, the respective icons are newly displayed in a line in accordance with the linkage with the focused icon (step S4005A). Moreover, the parameter information indicating the content list of the icon row currently focused is acquired (step S4006A).

Meanwhile, if the second flag is stored, move of the focus among contents in the content list is executed in accordance with the received operation information (step S4004B). Here, when receiving press of the entry button, the display of the detailed information of the content on the display screen, the viewing/programming of viewing or the recording/programming of recording of the content may be executed.

### <Brief Description of Effects of Eleventh Embodiment>

According to the integrated interface device of the eleventh embodiment, it is possible to operate the GUI by the hierarchical display unit, in which the icons are displayed in a line, and the content list GUI, by utilizing the direction key.

### <<Twelfth Embodiment>>

### <Concept of Twelfth Embodiment>

An integrated interface device of a twelfth embodiment is based on the above embodiment, and using the direction key described in the third embodiment, it is possible to output the content list from GUI configured by arranged icons of the type of media etc. Moreover, as to the content in the outputted content list, it is possible to carry out entry of processing for the display of detailed information of the content, viewing or recording of the content.

### <Functional Configuration of Twelfth Embodiment>

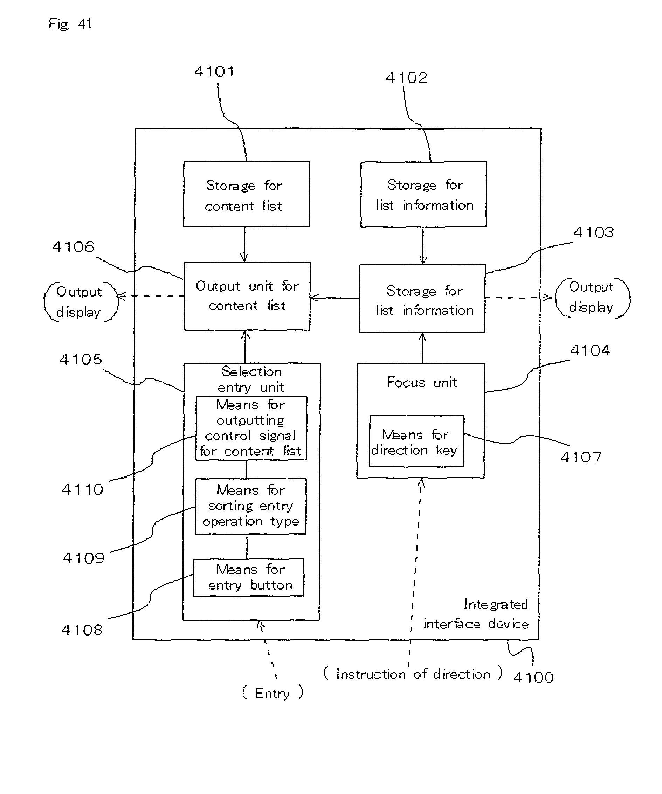

Fig. 41 is a functional block diagram of the integrated interface device of the twelfth embodiment. As shown in Fig. 41, the 'integrated user interface device' (4100) of the twelfth embodiment is based on the third embodiment, and comprises a 'storage for content list' (4101), a 'storage for list information' (4102), a 'hierarchical display unit' (4103), a 'focus unit' (4104), a 'selection unit' (4105), an 'output unit for content list' (4106), and 'means for direction key' (4107) and/or 'means for entry key' (4108). Moreover, the integrated interface device of the twelfth embodiment may comprise the above-described components, which are not indicated in diagrams, based on other embodiments. Note that, these components have already been described in the above embodiment, so that descriptions are omitted. Moreover, in the integrated interface device of the twelfth embodiment, the focus unit further comprises 'means for sorting entry operation type' (4109) and 'means for outputting control signal for content list' (4110).

The 'means for sorting entry operation type' (4109) has a function of determining which unit executes the display of interface upon the entry operation for the entry button of the means for entry button, the hierarchical display unit or the output unit for content list, and for example, can be implemented by the CPU and the main memory, and a program for sorting entry operation type. Specifically, similar to the 'means for sorting key operation type', for example, it is determined which GUI is currently displayed by using the flag information indicating the program currently executed by the CPU for displaying the GUI.

The 'means for outputting control signal for content list' (4110) has a function of outputting a control signal for the output unit for content list such that the content list having the linkage with the focused icon in response to the entry operation, when the determination result by the means for sorting entry operation type indicates that the display is executed by the hierarchical display unit, and for example, can be implemented by the CPU and the main memory, and a program for outputting control signal for content list.

Specifically, if it is determined that the display of the GUI is executed by the hierarchical display unit, when receiving an operation of the entry button provided on the input device such as the remote control, the content list having the linkage with the currently focused icon row, for example, the parameter information, indicating the 'recording list' of the 'AVHDD' connected to the 'iLink', is acquired. Subsequently, the parameter information is outputted as the control signal, and the recording list of the AVHDD is outputted and displayed as the content list.

Meanwhile, if it is determined that the display of the GUI is executed by the output unit for content list, when receiving an operation of the entry button provided on the input device such as the remote control, a predetermined process for the content currently focused in the content list is executed. This predetermined process is not limited, and examples of the process include the display of detailed information of the content, viewing (reproduction)/programming of viewing of the content, recording/programming of recording of the content, or deleting the data of the recorded content, copying the data of the recorded content, or start process for editing (e.g., change of file name or edition of scenes) of the recorded content or other contents. Moreover, the GUI for selection of the desired process by the user may be displayed.

Thus, it is possible to operate the GUI by the hierarchical display unit, in which the icons are displayed in a line, and the content list GUI, by utilizing the direction key on the input device.

### <Processing Flow of Twelfth Embodiment>

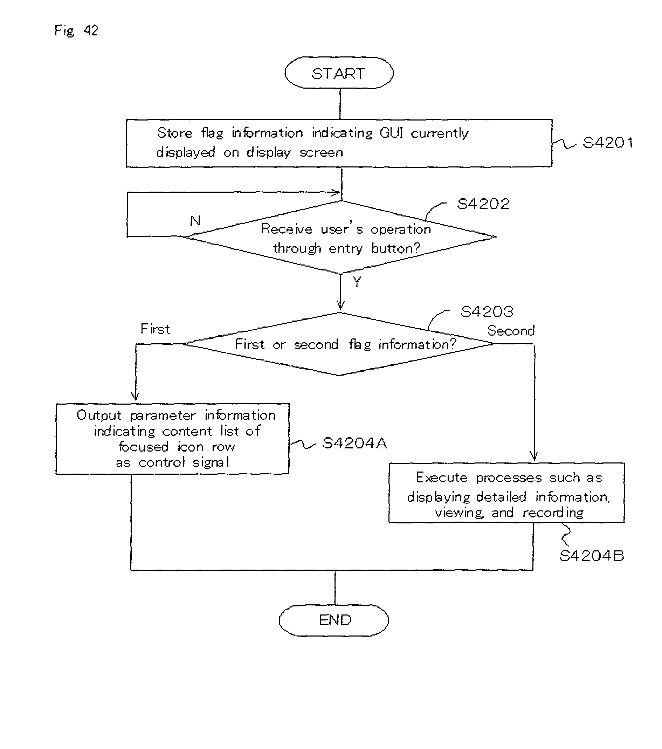

Fig. 42 is a flowchart showing processes in the integrated interface device of the twelfth embodiment. Note that, the following step may be executed by the respective hardware configurations of a computer as the above, or may configure a program, which is stored in a medium and is for controlling the computer. As shown in Fig. 42, at the outset, the flag information, the information indicating that the icons such as the icon of media type is displayed in a line based on the list information (the first flag), or the information indicating that the content list is outputted and displayed (the second flag), is stored in the main memory (step S4201). Subsequently, the user's operation using the direction key provided on the input device is received (step S4202), and the stored flag information is referred (step S4203). If the first flag is stored, the parameter information indicating the content list of the icon row currently focused is outputted as the control signal for outputting the content list (step S4204A).

Meanwhile, if the second flag is stored, in accordance with the received operation information, as to the content focused in the content list, the display of the detailed information of the content on the display screen, the viewing/programming of viewing or the recording/programming of recording of the content may be executed (step S4204B).

### <Brief Description of Effects of Twelfth Embodiment>

According to the integrated interface device of the twelfth embodiment, it is possible to operate the GUI by the hierarchical display unit, in which the icons are displayed in a line, and the content list GUI, by utilizing the entry key on the input device.

### Description of Reference Numerals

0200 Integrated interface device
0201 Storage for content list
0202 Storage for list information
0203 Hierarchical display unit
0204 Focus unit
0205 Selection entry unit
0206 Output unit for content list

## Claims

1. An integrated interface device, comprising:
a storage for content list, storing a content list;
a storage for list information, storing list information including a linkage among a type of a media for acquiring content, a type of device for acquiring the content with respect to each type of media, and content list ID acquirable with respect to each type of device;
a hierarchical display unit, displaying an icon for type of media, an icon for type of device subsequent to the icon for type of media, and an icon for content list subsequent to the icon for type of device in a line based on the list information in accordance with each linkage;
a focus unit for focusing the respective icons;
a selection entry unit for entry of selection of the focused icon; and
an output unit for content list, outputting the content list having the linkage with the icon in accordance with the selection entry by the selection entry unit.

2. The integrated interface device according to Claim 1,
wherein the hierarchical display unit further comprises
means for receiving graphic instruction, receiving a graphic instruction, and
means for displaying options in same hierarchy, displaying other icons in same hierarchy, such that the other icons are selectable, focusable and arranged perpendicular to the line of the icon for type of media, the icon for type of device, and the icon for content list so as to make L-shape or T-shape, with respect to each hierarchy by the graphic instruction for each icon

3. The integrated interface device according to Claim 2,
wherein the hierarchical display unit further comprises
means for displaying along edge, displaying two lines of the L-shape or an upper line of the T-shape along edges or an edge of a display screen.

4. The integrated interface device according to Claim 3,
wherein the hierarchical display unit further comprises
means for receiving selection entry of edge, receiving the entry of selection of the edge of the display screen, the edge is used for the display by the means for displaying along with edge.

5. The integrated interface device according to any one of Claims 1 to 4,
wherein the focus unit further comprises
means for direction key, including a direction-key for moving the focus.

6. The integrated interface device according to Claim 5,
wherein the focus unit further comprises
means for direction key for content list, focusing a content identification indication included in the content list outputted from the output unit for content list, and moving the focus among the content identification indications, and utilizing same direction key as that of the means for direction key.

7. The integrated interface device according to Claim 6,
wherein the focus unit further comprises
means for sorting key operation type, determining which unit executes the display of interface, the hierarchical display unit or the output unit for content list,
means for controlling move for focusing in hierarchical display, acquiring all or part of the list information from the storage for list information, and controlling the move for focusing based on the direction key operation, when the determination result by the means for determining key operation type indicates that the display is executed by the hierarchical display unit, and
means for controlling move for focusing in content list, acquiring all or part of the list information from the storage for list information, and controlling the move for focusing based on the direction key operation, when the determination result by the means for sorting key operation type indicates that the display is executed by the output unit for content list,

8. The integrated interface device according to any one of Claims 1 to 7, wherein the selection entry unit further comprises
means for entry button, including an entry button.

9. The integrated interface device according to Claim 8,
wherein the selection entry unit further comprises
means for sorting entry operation type, determining which unit executes the display of interface upon the entry operation for the entry button of the means for entry button, the hierarchical display unit or the output unit for content list, and
means for outputting control signal for content list, outputting a control signal for the output unit for content list such that the content list having the linkage with the focused icon in response to the entry operation, when the determination result by the means for determining entry operation type indicates that the display is executed by the hierarchical display unit.

10. The integrated interface device according to any one of Claims 1 to 9,
wherein the hierarchical display unit further comprises
means for displaying navigation window frame, displaying a navigation window frame for the icon on a part of the display screen used for content reproduction, and
means for displaying icon within frame, displaying the icon within the navigation window frame.

11. The integrated interface device according to Claim 10, comprising:
an activation unit, including an activation button for activating the means for displaying navigation window frame and the means for displaying icon within frame.

12. The integrated interface device according to Claim 11,
wherein the output unit for content list further comprises
means for displaying content list frame, displaying a content list frame for the content list on a portion of the display screen used for the content reproduction excluding the navigation window frame.

13. The integrated interface device according to Claim 12,
wherein the activation unit further comprises
means for toggling, functioning the activation button such that an active window for the operation of the direction key is selected through toggle selection when the navigation window frame and the content list frame are simultaneously displayed.

14. The integrated interface device according to Claim 12 or 13,
wherein the activation unit further comprises
means for deleting, functioning the activation button to delete the navigation window frame and the icon within frame when the navigation window frame for the icon is displayed on the part of the display screen used for the content reproduction.

15. The integrated interface device according to any one of Claims 1 to 14,
wherein the focus unit comprises
means for storing last icon, storing the icon lastly focused, and
first default focusing means, focusing the icon stored by the means for storing last icon by default.

16. The integrated interface device according to any one of Claims 1 to 14,
wherein the focus unit further comprises
means for storing selection history information, storing selection history information of the icon as a target for the selection by the selection entry unit, and
second default focusing means, focusing the icon determined based on the stored selection history information by default.

17. A method for controlling an integrated interface device, which includes a storage for content list storing a content list, the method causing a computer to execute the steps of:
acquiring list information including a linkage between a type of a media for acquiring content, a type of a device for acquiring the content with respect to each type of media, and content list ID with respect to each type of device;
hierarchical displaying an icon for type of media, an icon for type of device subsequent to the icon for type of media, and an icon for content list subsequent to the icon for type of device in a line based on the list information in accordance with each linkage;
focusing the respective icons;
entry of selection of the focused icon; and
outputting the content list having the linkage with the icon in accordance with the selection entry by the selection entry unit.
